# EUROPÄISCHE PATENTSCHRIFT

(11) **EP 4 522 451 B1**
(45) Veröffentlichungstag und Bekanntmachung des Hinweises auf die Patenterteilung: **09.09.2026**
(21) Anmeldenummer: 23711941.7
(22) Anmeldetag: 14.03.2023
(51) Int. Cl.: B60P 7/08

(54) **GURTAUFROLLER**
BELT RETRACTOR
ENROULEUR DE CEINTURE

(30) Priorität: 11.05.2022 AT 503352022
(43) Veröffentlichungstag der Anmeldung: 19.03.2025
(73) Patentinhaber: TRUPE Engineering GmbH, 8324 Kirchberg an der Raab (AT)
(72) Erfinder: TRUMMER, Peter, 8341 Paldau (AT)
(74) Vertreter: Wirnsberger & Lerchbaum Patentanwälte OG
(86) Internationale Anmeldenummer: PCT/AT2023/060073
(87) Internationale Veröffentlichungsnummer: WO 2023/215920

(56) Entgegenhaltungen:
- WO-A1-2021/042025
- DE-B3- 102006 023 028
- KR-U- 19980 013 360
- SE-A1- 1 750 075
- US-A1- 2009 283 729
- US-A1- 2012 084 951
- US-B2- 10 836 300
- US-B2- 9 296 330

## Beschreibung

Die Erfindung betrifft einen Gurtaufroller gemäß dem Oberbegriff des Anspruchs 1.

Aus dem Stand der Technik sind Gurtaufroller der eingangs genannten Art bekannt geworden. So ist insbesondere aus dem Dokument DE 10 2012 004 281 A1 eine Laderaumvorrichtung für ein Kraftfahrzeug bekannt geworden, um ein Ladegut mittels eines aufziehbaren Gurtes zu fixieren. Weiter ist auch aus dem Dokument US 4,842,458 ein Gurtaufroller zur Fixierung von Ladegut bekannt geworden. Weitere Gurtaufroller sind aus den Dokumenten US 7,575,224 B1, US 2012/0233824 A1 sowie US 2019/0143934 A1 bekannt.

Gurtaufroller sind weiter aus den Dokumenten WO 2021/042025 A1, US 9,296,330 B2, DE 10 2006 023 028 B3, US 10,836,300 B2 sowie KR 1998-013360 bekannt geworden.

Nachteilig bei Gurtaufrollern des Standes der Technik hat sich herausgestellt, dass diese nur mit großem Aufwand mit einem Gegenstand, insbesondere mit einem Fahrzeug, koppelbar sind, weswegen diese nur schwer handzuhaben sind.

Hier setzt die Erfindung an. Aufgabe der Erfindung ist es, einen Gurtaufroller der eingangs genannten Art anzugeben, welcher besonders einfach handhabbar und mit einem Fahrzeug koppelbar ist.

Diese Aufgabe wird erfindungsgemäß durch einen Gurtaufroller nach Anspruch 1 gelöst.

Im Rahmen der Erfindung wurde erkannt, dass durch eine entsprechend einfache formschlüssige Verbindung des Gehäuses des Gurtaufrollers mit einem korrespondierenden Gegenstück eine besonders leichte Anbringung des Gurtaufrollers ermöglicht ist, insbesondere in einem Fahrzeug.

Bevorzugt ist vorgesehen, dass Koppelelement translatorisch mit dem Gehäuse verbunden ist, insbesondere entlang einer Verschieberichtung, welche normal zur Achse ist. Das Koppelelement, welches insbesondere einen Haken oder eine Ausnehmung zur einfachen formschlüssigen Verbindung mit einem entsprechenden Gegenstück, welches insbesondere fix mit einer Fahrzeugkarosserie verbunden sein kann, aufweisen kann, kann dann relativ zum Gehäuse geschoben werden, sodass dieses in einer Arbeitsposition aus dem Gehäuse vorsteht und beispielsweise in einer Ruheposition bündig mit dem Gehäuse abschließt. Dadurch ist ein kleiner Bauraum des Gurtaufrollers in einer Ruheposition ermöglicht, während der Gurtaufroller gleichzeitig in der Arbeitsposition einfach mit einem entsprechenden Gegenstück koppelbar ist.

Günstig ist es, wenn das Koppelelement rotatorisch mit dem Gehäuse verbunden ist, insbesondere um eine zur Achse etwa parallele oder normale Schwenkachse. Somit kann das Koppelelement einfach aus dem Gehäuse ausgeschwenkt werden, um von einer Ruheposition in eine Arbeitsposition gebracht zu werden.

Es kann auch vorgesehen sein, dass das Koppelelement durch eine Betätigung eines Betätigungselementes wie beispielsweise eines Knopfes aus einer Ruheposition in eine Arbeitsposition bringbar ist, wobei gleichzeitig durch Betätigung des Betätigungselementes der Gurt relativ zum Gehäuse bewegbar, insbesondere auf- bzw. abrollbar ist, während der Gurt andernfalls nicht relativ zum Gehäuse auf- bzw. abrollbar ist.

Erfindungsgemäß ist vorgesehen, dass das Koppelelement von einer Ruheposition, in welcher das Koppelelement flächig am Gehäuse anliegt und nicht mit dem Gegenstück koppelbar ist, in eine Arbeitsposition bringbar ist, in welcher das Koppelstück seitlich am Gehäuse angeordnet ist und mit dem Gegenstück koppelbar ist. Das Koppelelement kann sowohl in der Ruheposition als auch in der Arbeitsposition grundsätzlich starr mit dem Gehäuse verbunden sein. Somit wird das Koppelelement relativ zum Gehäuse aus der Ruheposition in die Arbeitsposition geschwenkt bzw. translatorisch verfahren, wobei natürlich auch eine Kombination dieser Bewegungen möglich ist.

Um eine besonders einfache Betätigung zu erreichen, ist erfindungsgemäß vorgesehen, dass das Koppelelement in der Ruheposition gegen eine Halteeinrichtung mittels einer Feder federbelastet ist, wobei die Halteeinrichtung mittels eines Betätigungselementes derart bewegbar ist, dass das Koppelelement mittels der Feder aus der Ruheposition in die Arbeitsposition bewegbar ist. Das Betätigungselement kann somit beispielsweise eine Bewegung des Koppelelementes relativ zum Gehäuse freigeben, sodass eine mit der Feder auf das Koppelelement relativ zum Gehäuse aufgebrachte Kraft zu einer Bewegung des Koppelelementes von der Ruheposition in die Arbeitsposition führt. Das Betätigungselement kann dabei auch dazu genutzt werden, neben einem Freigeben einer Bewegung des Koppelelementes eine Bewegung des Gurtes relativ zum Gehäuse freizugeben, um eine Bewegbarkeit des Gurtes relativ zum Gehäuse zu blockieren, wenn das Betätigungselement nicht betätigt wird. Das Betätigungselement kann ebenfalls gegen eine Federkraft betätigbar sein.

Günstig ist es, wenn das Koppelelement eine Ausnehmung aufweist, in welche Ausnehmung ein Adapter mit einem Hinterschnitt in einen Einführbereich einführbar und durch eine Verschiebung in einem Fixierbereich mittels des Hinterschnittes fixierbar ist. Dies ermöglicht eine besonders einfache formschlüssige Verbindung des Gurtaufrollers bzw. des Koppelelementes mit einem hier durch einen entsprechenden Adapter gebildeten Gegenstück. Der Adapter kann wiederum mit einer Karosserie eines Fahrzeuges oder dergleichen verbunden sein, insbesondere in die Karosserie eingeschraubt oder anderweitig mit der Karosserie verbunden sein.

Es kann vorgesehen sein, dass das Gehäuse eine mit dem Fixierbereich korrespondierende Gehäuseausnehmung aufweist, mittels welcher der Adapter im Fixierbereich fixierbar ist, insbesondere wenn das Koppelelement in der Ruheposition ist. Das Gehäuse kann dann beispielsweise in der Weise mit dem Adapter verbunden werden, dass das Koppelelement in eine Arbeitsposition gebracht wird, in welcher der Adapter in den Einführbereich eingeführt und in den Fixierbereich verschoben wird, wonach das Koppelelement wieder in die Ruheposition bewegt und dort mittels der Gehäuseausnehmung fixiert wird, sodass der Adapter erst durch eine Bewegung des Koppelelementes aus der Ruheposition heraus in die Arbeitsposition wieder vom Gurtaufroller lösbar ist.

Günstig ist es, wenn ein lösbar mit dem Koppelbereich formschlüssig verbindbarer Adapter vorgesehen ist, welcher an einem ersten Ende mit einem Untergrund, insbesondere einer Fahrzeugkarosserie, verbindbar ist und einen zylindrischen Bereich aufweist, welcher insbesondere in einen Einführbereich einer Ausnehmung einführbar ist, wobei zwischen dem zylindrischen Bereich und dem ersten Ende ein Hinterschnitt vorgesehen ist, mit welchem der Adapter insbesondere im Fixierbereich fixierbar ist. Wenn der Adapter einen entsprechend zylindrischen Bereich aufweist bzw. rotationssymmetrisch ausgebildet ist, kann der Gurtaufroller einfach um eine entsprechende Rotationsachse relativ zum Adapter verdreht werden, sodass sich eine für eine günstige Krafteinleitung vorteilhafte Ausrichtung des Gurtaufrollers ergibt.

Günstig ist es, wenn ein lösbar mit dem Koppelbereich formschlüssig und/oder kraftschlüssig verbindbarer Adapter vorgesehen ist, wobei eine Verbindung zwischen dem Adapter und dem Gurtaufroller durch Betätigung eines Federelementes lösbar ist. Adapter und Gurtaufroller bzw. Koppelbereich können dann beispielsweise derart ausgebildet sein, dass durch ein Koppeln von Koppelbereich und Adapter eine Feder bewegt wird, insbesondere mittels einer Rampe oder dergleichen, wobei jedoch ein Lösen durch eine entsprechende Gegenbewegung der Feder nur möglich ist, wenn die Feder manuell, insbesondere mittels eines Tasters oder dergleichen, betätigt wird.

Bevorzugt ist ein formschlüssig mit dem Koppelelement verbindbarer Adapter vorgesehen, wobei das Koppelelement derart mit dem Adapter verbindbar ist, dass das Koppelelement um eine Drehachse, welche insbesondere etwa normal zur Achse ist, relativ zum Adapter drehbar ist. In diesem Fall kann der Gurtroller beispielsweise mittels des Adapters mit einem mit einem Fahrzeug verbundenen Gegenstück gekoppelt und gleichzeitig relativ zum Gegenstück um zwei Achsen verschwenkt werden. Bei einer Benutzung kann dann das Gehäuse über das Koppelelement mit dem Gegenstück verbunden werden, wonach der Gurt aus dem Gurtaufroller gezogen und an einer beliebigen Position fixiert wird. Durch die Verschwenkbarkeit um zwei Achsen, welche sich bevorzugt schneiden und zueinander normal sind, ergibt sich dann leicht eine Ausrichtung des Gehäuses entsprechend einer aufgebrachten Kraft. Somit ist eine günstige Handhabung leicht möglich.

Es hat sich bewährt, dass eine relativ zum Gehäuse um die Achse drehbar gelagerte Aufrolleinrichtung, insbesondere eine Rolle, vorgesehen ist, wobei eine Bewegbarkeit der Aufrolleinrichtung relativ zum Gehäuse um die Achse durch ein bewegbar mit dem Gehäuse verbundenes Schwert, insbesondere ein etwa parallel zur Achse translatorisch verschiebbares Schwert, revisibel blockierbar ist. Dies ermöglicht ein Fixieren des Gurtes relativ zum Gehäuse und somit ein tatsächliches Spannen eines Ladegutes beispielsweise in einem Kraftfahrzeug.

Das Schwert kann dabei beispielsweise in ein Rechteckprofil eingreifen, welches mit der Aufrolleinrichtung, welche vorzugsweise als Rolle ausgebildet ist, gekoppelt ist, sodass beispielsweise eine Bewegung des Schwertes radial nach innen ein Einrasten im Rechteckprofil bewirkt, welches Einrasten eine Bewegung des Gurtes relativ zum Gehäuse blockiert, während eine Bewegung des Schwertes radial nach außen das Schwert aus dem Rechteckprofil herausbewegt, wodurch eine Blockade aufgehoben wird und die Rolle relativ zum Gehäuse samt dem Gurt bewegbar ist.

Eine besonders einfache Anwendbarkeit bei gleichzeitig einfacher Herstellbarkeit ergibt sich, wenn ein federbelasteter Arm vorgesehen ist, welcher von einer ersten Position in eine zweite Position bringbar ist, in welcher zweiten Position der Arm das Schwert in einer Freilaufposition hält, wobei das Schwert vorzugsweise in einer Richtung normal zur Achse bewegbar ist. Das Schwert kann dann einfach mittels des Armes betätigt werden. Dabei kann das Schwert beispielsweise radial bewegbar sein, um in ein an einer Scheibe, welche mit der Aufrolleinrichtung, üblicherweise einer Rolle, verbunden ist, angeordnetes Rechteckprofil einzugreifen, sodass eine Bewegbarkeit der Rolle relativ zum Gehäuse durch eine radiale Bewegung des Schwertes nach innen blockierbar und durch eine radiale Bewegung des Schwertes nach außen freigebbar ist. Das Schwert ist dann bevorzugt durch einen Arm radial bewegbar, welcher Arm durch ein Aktivieren des Koppelelementes und/oder ein Ausrollen des Gurtes betätigbar sein kann.

Besonders bevorzugt ist vorgesehen, dass der Gurtaufroller derart ausgebildet ist, dass der Arm durch eine Bewegung des Koppelelementes von einer Ruheposition in eine Arbeitsposition und/oder durch ein Ausziehen des Gurtes in die zweite Position bringbar ist. Der Arm kann somit beispielsweise derart am Gehäuse angeordnet sein, dass eine Bewegung der Rolle bzw. des Gurtes in einer Auszugsrichtung den Arm in die zweite Position bewegt, in welcher dieser das Schwert gegen eine Feder hält und somit eine Bewegung des Gurtes relativ zum Gehäuse ermöglicht.

Günstig ist es, wenn der Arm gegen die Aufrolleinrichtung federbelastet ist, sodass ein leichter Rücklauf des Gurtes eine Bewegung des Armes von der zweiten Position in die erste Position bewirkt, wodurch das Schwert mittels einer Feder zurückbewegt wird und eine Bewegung der Aufrolleinrichtung blockiert. Auf diese Weise ist eine Betätigung besonders einfach, zumal der Gurt bis zu einer gewissen Position ausgezogen werden kann, wonach der Gurt, der wie bei Gurtaufrollern üblich durch Feder, welche in der Regel als Blattfeder ausgebildet ist, oder dergleichen im Gehäuse derart federbelastet ist, dass der Gurt durch die Blattfeder in das Gehäuse zurückgezogen bzw. aufgerollt werden würde, leicht in das Gehäuse zurückgezogen wird, wodurch das Schwert zurückbewegt wird und ein vollständiges Aufrollen des Gurtes blockiert. Als Rücklauf wird somit hier eine Aufrollbewegung des Gurtes verstanden. Ein entsprechendes Aufrollen durch die Blattfeder kann jedoch natürlich auch erfolgen, wenn das Schwert manuell in eine Freilaufposition bewegt wird, in welcher das Schwert eine Bewegung des Gurtes nicht blockiert.

Um ein besonders sicheres Befestigen von Gegenständen insbesondere in einem Kraftfahrzeug auf besonders einfache Weise zu ermöglichen, ist bevorzugt vorgesehen, dass eine Ratsche mit einem Ratschenhebel vorgesehen ist, mit welchem der Gurt aufrollbar und spannbar ist. Die Ratsche kann grundsätzlich auf jede aus dem Stand der Technik bekannte Weise ausgebildet sein, beispielsweise mit einem Sägezahnprofil.

Der Ratschenhebel ist üblicherweise gegenüber dem Gehäuse um die Achse drehbar gelagert, sodass der Ratschenhebel auf eine Aufrolleinrichtung, insbesondere eine Rolle, wirken kann, mit welcher der Gurt verbunden ist, sodass der Gurt mittels des Ratschenhebels aufrollbar ist. Der Ratschenhebel kann dabei auch radial bewegbar mit einer Ratschenlagerung verbunden sein, welche Ratschenlagerung um die Achse schwenkbar mit dem Gehäuse verbunden ist. Dadurch kann der Ratschenhebel relativ zum Gehäuse auch radial nach außen bewegt werden, um beispielsweise durch einen Eingriff in ein Sägezahnprofil den Gurt bei einer entsprechenden Bewegung spannen zu können.

Die Ratsche ist umso leichter betätigbar, je länger der Ratschenhebel ist. Um bei langem Ratschenhebel gleichzeitig einen geringen Bauraum des Gurtaufrollers zu erreichen, sodass dieser leicht verstaut werden kann, ist es günstig, wenn der Ratschenhebel außerhalb des Gehäuses geteilt ist, wobei ein äußeres Ratschenhebelteil relativ zu einem inneren Ratschenhebelteil schwenkbar ist, insbesondere um eine zur Achse parallele Ratschenhebelschwenkachse. Anders ausgedrückt kann somit ein Teil des Ratschenhebels an das Gehäuse herangeschwenkt werden, wodurch ein ausklappbarer und somit bei Bedarf leicht verstaubarer Ratschenhebel erreicht ist.

Besonders günstig ist es, wenn eine relativ zum Gehäuse um die Achse drehbar gelagerte Aufrolleinrichtung, insbesondere eine Rolle, vorgesehen ist, mit welcher Aufrolleinrichtung ein Sägezahnprofil verbunden ist, um bei einer Rotation um die Achse in eine Spannrichtung ein Spannen des Gurtes zu erreichen und gleichzeitig ein Entspannen durch eine Rotation entgegen der Spannrichtung zu vermeiden. Der Gurt wird somit auf die um die Achse drehbar gelagerte Rolle aufgerollt, welche Rolle üblicherweise mit einer Blattfeder oder dergleichen verbunden ist, um den Gurt automatisch im Gurtaufroller aufrollen zu können, ähnlich einem aus dem Stand der Technik bekannten Rollmeter. Die Rolle ist üblicherweise mit einer oder mehreren seitlichen Scheiben, welche etwa in einer Ebene normal zur Achse ausgerichtet sind, verbunden, welche Scheiben das Sägezahnprofil aufweisen. Dadurch ist eine Ratschenfunktion auf besonders einfache Weise umsetzbar.

Bei einem Spannen kann somit beispielsweise ein Ratschenschwert durch einen flachen Bereich bzw. eine flache Flanke des Sägezahnprofils angehoben werden, welches Ratschenschwert eine Bewegung entgegen der Spannrichtung gegenüber einem steilen Bereich bzw. einer steilen Flanke des Sägezahnprofils blockiert, sodass der Gurt mit einer Bewegung des Ratschenschwertes in einer Spannrichtung spannbar ist und eine Bewegung des Ratschenschwertes entgegen der Spannrichtung keine Bewegung des Gurtes bedingt. Hierzu kann auch ein weiteres Verriegelungsschwert vorgesehen sein, welches eine Entspannung des Gurtes bei einer Bewegung des Ratschenschwertes entgegen der Spannrichtung verhindert.

Bevorzugt ist vorgesehen, dass ein um die Achse drehbar mit dem Gehäuse verbundener Ratschenhebel vorgesehen ist, welcher auf ein federbelastetes Ratschenschwert wirkt, wobei die Aufrolleinrichtung über das Ratschenschwert mit dem Ratschenhebel relativ zum Gehäuse in Spannrichtung betätigbar ist.

Besonders günstig ist es, wenn der Ratschenhebel relativ zur Aufrolleinrichtung entgegen der Spannrichtung bewegbar ist, indem das Ratschenschwert durch das Sägezahnprofil angehoben wird.

Um ein Spannen eines Gurtes besonders einfach zu erreichen, ist bevorzugt vorgesehen, dass im Gehäuse ein federbelastetes Verriegelungsschwert vorgesehen ist, welches in einer ersten Position eine Bewegung der Aufrolleinrichtung entgegen der Spannrichtung relativ zum Gehäuse blockiert und durch das Sägezahnprofil entgegen einer Federkraft anhebbar ist, um eine Bewegung der Aufrolleinrichtung relativ zum Gehäuse entgegen der Spannrichtung zu ermöglichen.

Günstig ist es, wenn das Verriegelungsschwert mit einer Bewegung des Ratschenhebels relativ zum Gehäuse entgegen der Spannrichtung anhebbar ist, um eine Bewegung der Aufrolleinrichtung relativ zum Gehäuse entgegen der Spannrichtung zu ermöglichen. Hierzu kann beispielsweise der Ratschenhebel oder eine Ratschenlagerung mit einer radial ansteigenden Kontur ausgebildet sein, mittels welcher Kontur bei entsprechender Bewegung das Verriegelungsschwert angehoben werden kann.

Der Ratschenhebel hat in diesem Fall zwei Funktionen, nämlich einerseits mit einer Bewegung relativ zum Gehäuse entgegen der Spannrichtung das Verriegelungsschwert anzuheben und dieses somit von der Aufrolleinrichtung zu lösen, um eine Bewegung des Gurtes zu erlauben und andererseits bei einer Bewegung relativ zum Gehäuse in Spannrichtung die Aufrolleinrichtung über das Sägezahnprofil zu betätigen und dabei den Gurt zu spannen. Eine entsprechende doppelte Wirkung des Ratschenhebels ergibt somit eine besonders einfache Betätigbarkeit des Gurtaufrollers.

Günstig ist es, wenn das Koppelelement durch eine Bewegung des Ratschenhebels relativ zum Gehäuse entgegen der Spannrichtung von einer Ruheposition in eine Arbeitsposition bewegbar ist, insbesondere indem durch die Bewegung des Ratschenhebels eine Halteeinrichtung gelöst wird, welche das Koppelelement gegen eine Feder in der Ruheposition hält. Der Ratschenhebel erfüllt in diesem Fall mit einer Bewegung entgegen der Spannrichtung zwei Funktionen, nämlich einerseits das Lösen des Verriegelungsschwertes, sodass der Gurt relativ zum Gehäuse bewegbar bzw. ausrollbar ist, und andererseits das federbelastete Koppelelement freizugeben, sodass dieses durch die Feder von der Ruheposition in die Arbeitsposition bewegt wird, in welcher das Koppelelement beispielsweise mit einem Adapter oder einem anderen Gegenstück formschlüssig koppelbar ist. Der Gurtaufroller kann in diesem Fall derart ausgebildet sein, dass dieser ausschließlich durch Betätigung des Ratschenhebels betätigbar ist. Die Halteeinrichtung für das Koppelelement kann beispielsweise durch einen um eine zur Achse parallele Koppelhebelachse schwenkbar gelagerten Koppelhebel gebildet sein, welcher Koppelhebel eine Bewegung des Koppelelementes in einer Ruheposition gegen eine Federkraft blockiert und durch den Ratschenhebel betätigbar ist, sodass eine Bewegung des Koppelelementes freigegeben ist und die Feder das Koppelelement von der Ruheposition in die Arbeitsposition bewegt.

Günstig ist es, wenn mit dem Gurt ein Gurtfixierelement, insbesondere ein Haken, vorgesehen ist, welches Gurtfixierelement insbesondere eine Ausnehmung aufweist, sodass das Gurtfixierelement formschlüssig mit einem Adapter, insbesondere einem in einer Airlineschiene angeordneten Adapter, verbindbar ist. Somit kann nicht nur das Gehäuse des Gurtaufrollers über das Koppelelement, sondern auch der Gurt selbst leicht mit einem entsprechenden Gegenstück wie beispielsweise einem in einer Airlineschiene angeordneten Adapter verbunden werden. Dadurch kann beispielsweise ein zwischen zwei Airlineschienen befindlicher Gegenstand leicht mittels des Gurtes gespannt werden, welcher einerseits über das endseitig am Gurt angeordnete Gurtfixierelement mit einem in der ersten Airlineschiene befestigten Adapter und andererseits über das Gehäuse mit einem in der zweiten Airlineschiene angeordneten Adapter verbunden ist, wobei der Gurt beispielsweise mittels einer Ratsche gespannt werden kann.

Bevorzugt ist das Gurtfixierelement formschlüssig mit dem Gehäuse verbindbar. Somit ergibt sich ein aufgeräumter Zustand des Gurtaufrollers, wenn dieser nicht benutzt wird. Insbesondere ragen somit im Unterschied zum Stand der Technik keine losen Gurtenden aus dem Gurtaufroller hervor.

Wenn nur das Gehäuse mit einem Gegenstück verbunden ist, ist ein Befestigen eines Gegenstandes besonders dann auf einfache Weise möglich, wenn der Gurt durch eine Ausnehmung im Gurtfixierelement geführt ist, wobei mit dem Gurt ferner, insbesondere endseitig, ein Ringelement verbunden ist, welches in einer ersten Position und einer zweiten Position formschlüssig mit dem Gurtfixierelement verbindbar ist, um in der ersten Position einerseits ein endseitiges Befestigen des Gurtes am Gurtfixierelement mittels des Ringelementes und andererseits in der zweiten Position ein Fixieren eines Körpers durch Umgreifen des Körpers durch den Gurt zu ermöglichen, wobei eine Gurtschlaufe durch das Gurtfixierelement und das Ringelement gebildet wird.

Somit kann das Gurtfixierelement endseitig am Gurt befestigt sein, indem das Ringelement formschlüssig in der ersten Position mit dem Gurtfixierelement verbunden ist. In diesem Fall ist der Gurt nahe einem Gurtende durch die Ausnehmung im Gurtfixierelement geführt. Weiter kann der Gurt auch beabstandet vom Ringelement durch die Ausnehmung geführt sein, wobei das Ringelement in der zweiten Position mit dem Gurtfixierelement verbunden ist. In diesem Fall bildet der Gurt eine Schlinge bzw. Schlaufe aus, indem ein Gurtende mit einem vom Gurtende beabstandeten Teil des Gurtes durch das Ringelement und das Gurtfixierelement verbunden ist. In der Schlinge kann somit ein Gegenstand fixiert werden.

Ein erfindungsgemäßer Gurtaufroller kann grundsätzlich für unterschiedlichste Zwecke eingesetzt werden. Besonders bevorzugt ist bei einem Fahrzeug mit einem Gurtaufroller vorgesehen, dass der Gurtaufroller erfindungsgemäß ausgebildet ist.

Der Gurtaufroller kann grundsätzlich über das Koppelelement lösbar formschlüssig im Fahrzeug angeordnet sein. Je nach Anforderungen an ein optisches Erscheinungsbild kann auch vorgesehen sein, dass der Gurtaufroller hinter einer Blende im Fahrzeug angeordnet ist und der Gurt durch eine Öffnung in der Blende ragt. Der Gurt kann in diesem Fall über das Koppelelement auch dauerhaft mit der Fahrzeugkarosserie verbunden sein, wobei sowohl eine starre als auch eine bewegbare Verbindung möglich ist.

Insbesondere kann vorgesehen sein, dass das Koppelelement durch zwei zylinderförmige Elemente gebildet wird, welche mit entsprechenden Hohlzylindern formschlüssig gekoppelt sind, welche Hohlzylinder mit einer Fahrzeugkarosserie verbunden sind. Das Koppelelement und der Gurtaufroller sind dann um entsprechende Zylinderachsen, welche üblicherweise koaxial sind, schwenkbar, sodass der Gurtaufroller relativ zum Fahrzeug schwenkbar ist.

Weitere Merkmale, Vorteile und Wirkungen der Erfindung ergeben sich anhand der nachfolgend dargestellten Ausführungsbeispiele. In den Zeichnungen, auf welche dabei Bezug genommen wird, zeigen:
Fig. 1 bis 3 ein erstes Ausführungsbeispiel eines Gurtaufrollers;
Fig. 4 bis 6a ein weiteres Ausführungsbeispiel eines Gurtaufrollers;
Fig. 7 und 8 ein weiteres Ausführungsbeispiel eines Gurtaufrollers;
Fig. 9 einen weiteren Gurtaufroller;
Fig. 10 bis 22 Gurtaufroller mit Adapter;
Fig. 23 und 24 einen weiteren Gurtaufroller;
Fig. 25 bis 31 einen weiteren Gurtaufroller;
Fig. 32 bis 35 ein weiteres Ausführungsbeispiel eines Gurtaufrollers;
Fig. 36 und 37 einen Adapter für einen Gurtaufroller;
Fig. 38 bis 42 einen Gurtaufroller mit Adapter;
Fig. 43 bis 45 einen weiteren Gurtaufroller;
Fig. 46 bis 54 ein weiteres Ausführungsbeispiel eines erfindungsgemäßen Gurtaufrollers;
Fig. 55a bis 55e ein weiteres Ausführungsbeispiel eines Gurtaufrollers;
Fig. 56a und 56b Anwendungen eines Gurtaufrollers;
Fig. 57 eine Airlineschiene mit einem Adapter;
Fig. 58 einen Gurtaufroller mit einem Adapter.

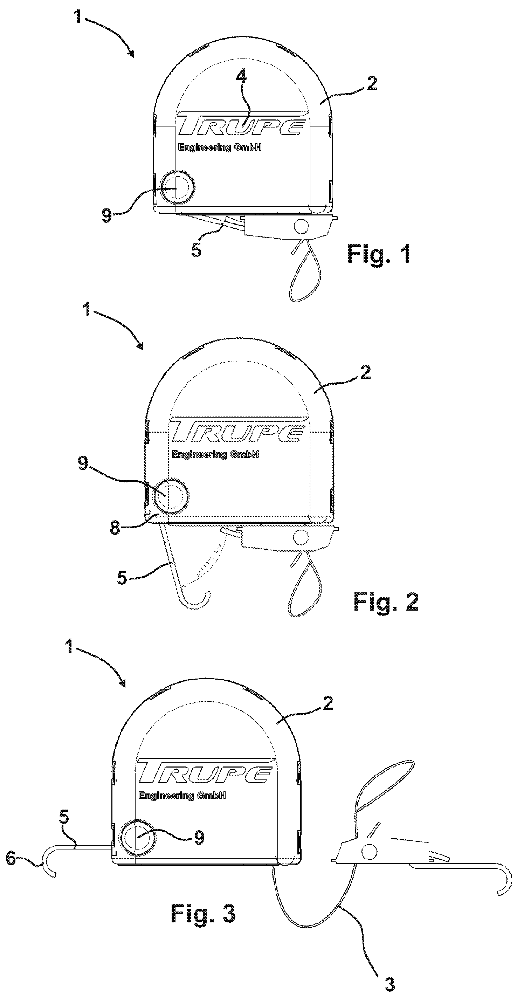

Fig. 1 bis 3 zeigen ein erstes Ausführungsbeispiel eines erfindungsgemäßen Gurtaufrollers 1. Wie ersichtlich weist der Gurtaufroller 1 jeweils ein Gehäuse 2 sowie einen aus dem Gehäuse 2 ragenden Gurt 3 mit einem endseitigen Haken 6 auf. Am Gehäuse 2 ist ferner ein Koppelelement 5, welches hier als Haken 6 ausgebildet ist, angeordnet, welches in diesem Fall um eine Schwenkachse 8 schwenkbar mit dem Gehäuse 2 verbunden ist. So ist das Koppelelement 5 in Fig. 1 in einer Ruheposition dargestellt, in welcher das Koppelelement 5 etwa flächig am Gehäuse 2 anliegt. Fig. 2 zeigt eine Position des Koppelelementes 5 zwischen einer in Fig. 1 dargestellten Ruheposition und einer in Fig. 3 dargestellten Arbeitsposition. Fig. 3 zeigt das Koppelelement 5 in einer Arbeitsposition, in welcher dieses seitlich aus dem Gehäuse 2 hervorsteht und damit eine formschlüssige Ankoppelung des Gehäuses 2 beispielsweise an eine korrespondierende Einrichtung, welche in einem Kraftfahrzeug angeordnet sein kann, insbesondere ein Gegenstück, ermöglicht, um ein einfaches Spannen von Ladegut im Fahrzeug zu erreichen. Endseitig am Gurt 3 ist auch hier ein hakenförmiges Element vorgesehen, mit welchem der Gurt 3 einfach an einem korrespondierenden Gegenstand eingehängt werden kann.

Bei dem in Fig. 1 bis 3 dargestellten Ausführungsbeispiel ist die Schwenkachse 8 etwa parallel zu einer Achse 4, um welche der Gurt 3 im Gurtaufroller 1 aufrollbar ist. Achse 4 und Schwenkachse 8 sind in den Fig. 1 bis 3 projizierend und daher nur als Punkte ersichtlich. Um das Koppelelement 5 von der in Fig. 1 dargestellten Ruheposition in die in Fig. 3 dargestellte Arbeitsposition zu bewegen, ist ein Betätigungselement 9 vorgesehen, mit welchem eine Bewegung des Koppelelementes 5 freigegeben werden kann, sodass eine auf das Koppelelement 5 wirkende Kraft und eine Kraft in Richtung der Arbeitsposition aufbringende Feder das Koppelement in die in Fig. 3 dargestellte Arbeitsposition bewegen kann. Bei einem manuellen Zurückbewegen des Koppelelementes 5 in die in Fig. 1 dargestellte Arbeitsposition wird diese Feder wieder gespannt, bis das Koppelelement 5 an einem mit dem Betätigungselement 9 verbundenen Element einrastet, durch welches Element das Koppelelement 5 bis zur nächsten Betätigung des Betätigungselementes 9 in der Ruheposition verharrt.

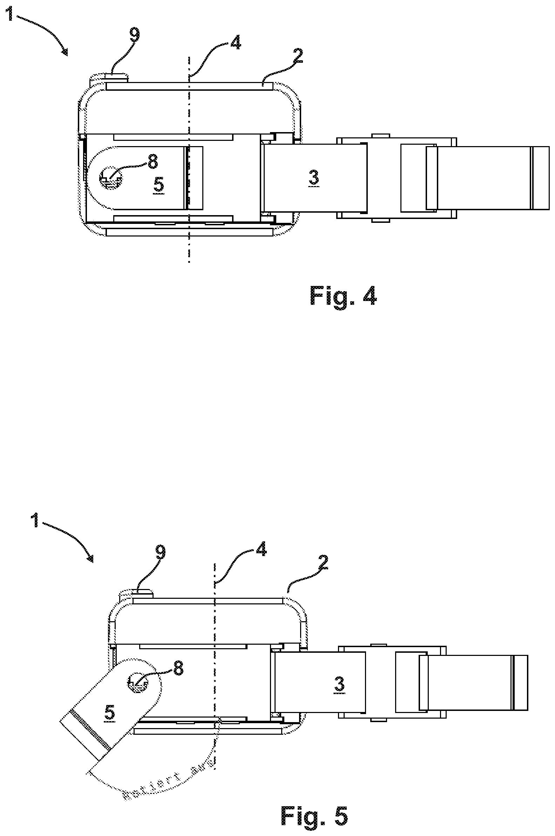

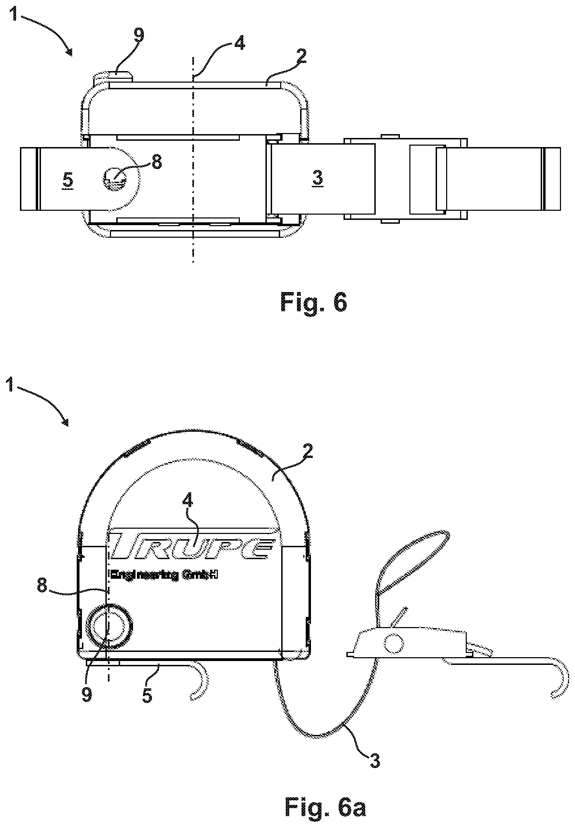

Fig. 4 bis 6a zeigen ein weiteres Ausführungsbeispiel eines erfindungsgemäßen Gurtaufrollers 1. Hier wird das Koppelelement 5 um eine Schwenkachse 8 ausgeschwenkt, welche etwa normal zur Achse 4 ist, um welche der Gurt 3 im Gurtaufroller 1 aufrollbar ist. Ein Ausschwenken des Koppelelementes 5 von der in Fig. 1 und Fig. 4 dargestellten Ruheposition in die in Fig. 3 und Fig. 6 dargestellte Arbeitsposition kann in beiden Fällen mittels einer nicht dargestellten Feder erfolgen, durch welche das Koppelelement 5 in der Ruheposition vorgespannt ist. Um das Koppelelement 5 von der Ruheposition in die Arbeitsposition zu bewegen, kann vorgesehen sein, dass das Koppelelement 5 in der Ruheposition mittels der Feder gegen ein Betätigungselement 9 gespannt wird und eine Betätigung des Betätigungselementes 9 das Koppelelement 5 freigibt, sodass dieses durch die Federkraft betätigt in die Arbeitsposition bewegt werden kann.

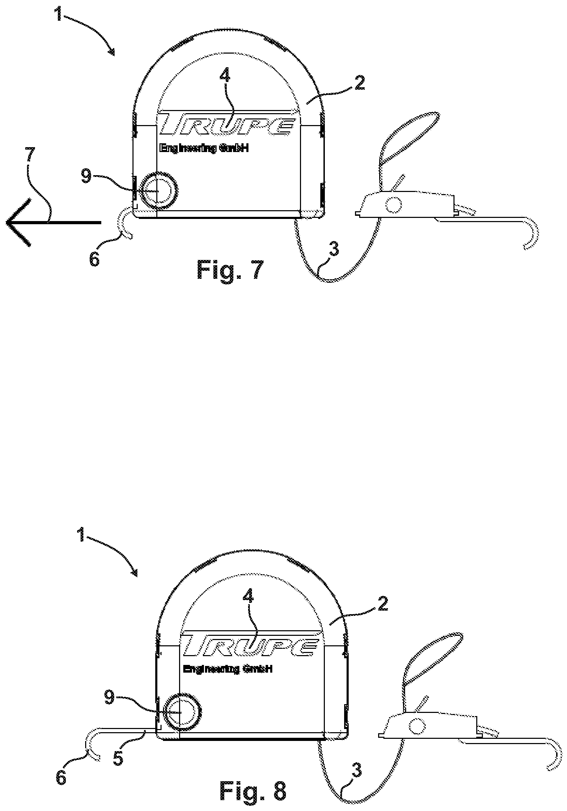

Fig. 7 und 8 zeigen ein weiteres Ausführungsbeispiel. Im Unterschied zu den in den Fig. 1 bis 6 dargestellten Ausführungsbeispielen ist hier das Koppelelement 5, welches wiederum als Haken 6 ausgebildet ist, nicht rotatorisch relativ zum Gehäuse 2 bewegbar, sondern translatorisch entlang einer Verschieberichtung 7. Auch hier kann vorgesehen sein, dass das Koppelelement 5 durch eine Feder vorgespannt ist und durch eine Betätigung eines Betätigungselementes 9, welches hier als Knopf ausgebildet ist, eine Bewegung des Koppelelementes 5 freigegeben wird, sodass die Feder das Koppelelement 5 aus der in Fig. 7 dargestellten Ruheposition in die in Fig. 8 dargestellte Arbeitsposition bewegen kann.

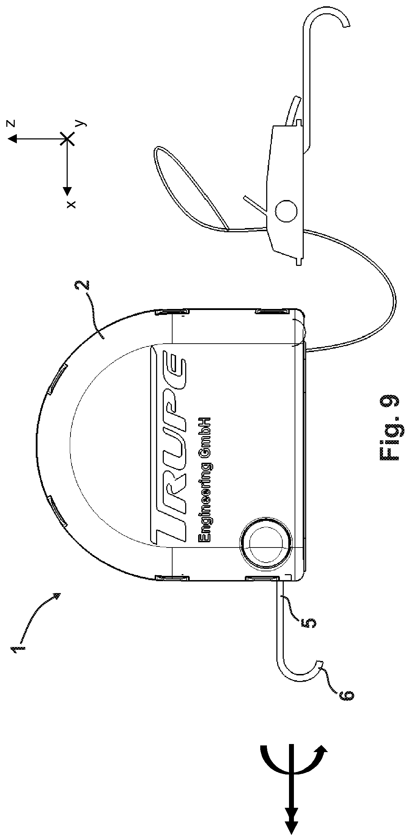

Fig. 9 zeigt den Gurtaufroller 1 in einer Arbeitsposition. Wie hier schematisch durch entsprechende Pfeile dargestellt, kann das Koppelelement 5 bzw. der endseitig angeordnete Haken auch in der Arbeitsposition noch relativ zum Gehäuse 2 verschwenkbar sein, sodass der Gurtaufroller 1 in unterschiedlichen Positionen in einem Fahrzeug anbringbar ist.

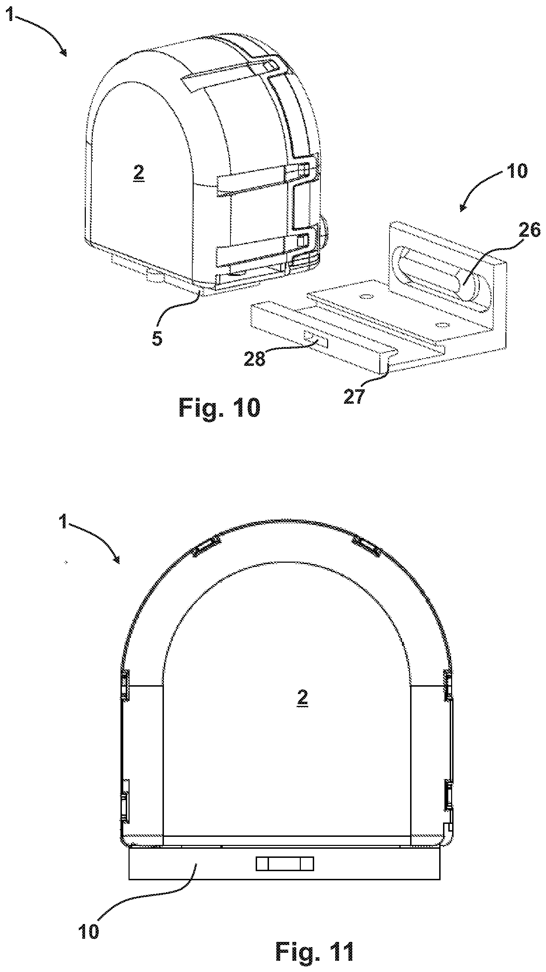

Fig. 10 bis 13a zeigen weitere Ausführungsbeispiele eines Gurtaufrollers 1. Hier ist das Koppelelement 5 nicht bewegbar zum Gehäuse 2 ausgebildet, sondern weist ein Profil 27 wie beispielsweise einen Nutstein auf, mit welchem der Gurtaufroller 1 bzw. das Gehäuse 2 des Gurtaufrollers 1 in einem korrespondierenden Adapter 10 wie beispielsweise einer Fixierschiene, welche beispielsweise in verschiedenen Fahrzeugmodellen üblich ist und ein korrespondierendes Profil 27 aufweist, auf einfache Weise fixiert werden kann. Das Profil 27 ist im dargestellten Beispiel als Schwalbenschwanzprofil ausgebildet.

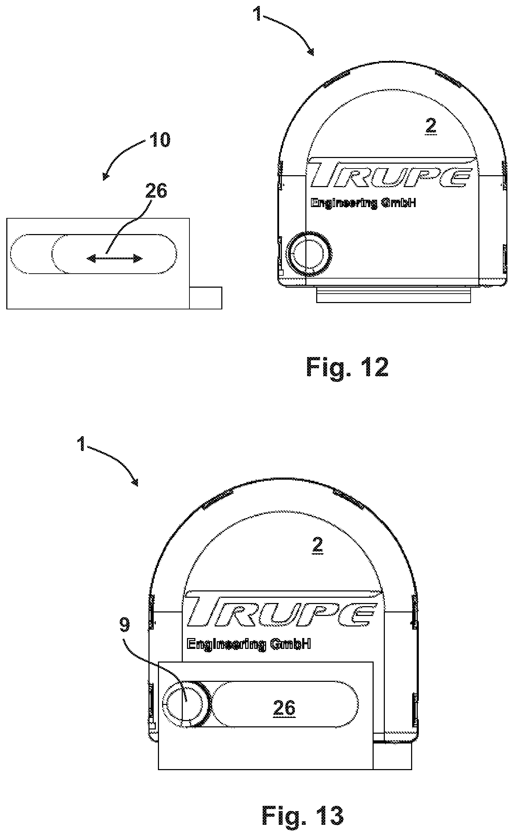

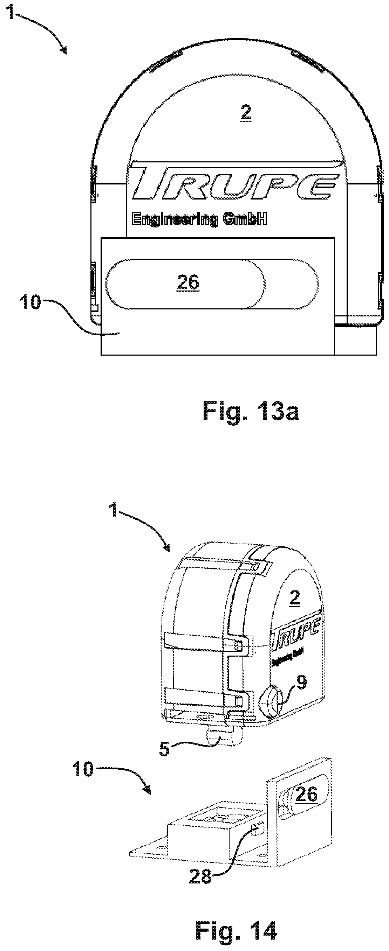

Der Adapter 10 weist bodenseitige Bohrungen auf, sodass der Adapter 10 beispielsweise mit Schrauben leicht an einem beliebigen Ort wie beispielsweise einem Gepäckbereich eines Fahrzeuges montiert werden kann. Um den Gurtaufroller 1 mittels des Adapters 10 zu betätigen, weist der Adapter 10 eine verschiebbar im Adapter 10 angeordnete Betätigungseinrichtung mit Anlaufschrägen 26 auf, wie in Fig. 12 durch einen Pfeil schematisch ersichtlich ist. Durch ein Verschieben der Anlaufschrägen 26 wird bei am Adapter 10 angeordnetem Gurtaufroller 1 das an diesem angeordnete Betätigungselement 9 betätigt, sodass durch eine in Fig. 13a dargestellte Position der Betätigungseinrichtung beispielsweise der Gurt 3 mit der im Gurtaufroller 1 befindlichen Feder eingerollt werden kann, ähnlich einem Rollmeter. Bei der in Fig. 13 dargestellten Position der Betätigungseinrichtung ist das Betätigungselement 9 am Gurtaufroller 1 nicht betätigt, sodass eine Bewegung des Gurtes 3 beispielsweise blockiert ist.

Bodenseitig im Adapter 10 ist eine Verriegelung 28 vorgesehen, mit welcher der Gurtaufroller 1 am Adapter 10 lösbar fixiert werden kann, sodass ein unbeabsichtigtes Entfernen des Gurtaufrollers 1 durch eine Bewegung entlang der Nut verhindert ist. Diese Verriegelung 28 kann beispielsweise durch ein federbelastetes Element am Gurtaufroller 1 gebildet sein, welches in eine entsprechende Verriegelungsöffnung im Adapter 10 eingreift und somit den Gurtaufroller 1 formschlüssig am Adapter 10 fixiert.

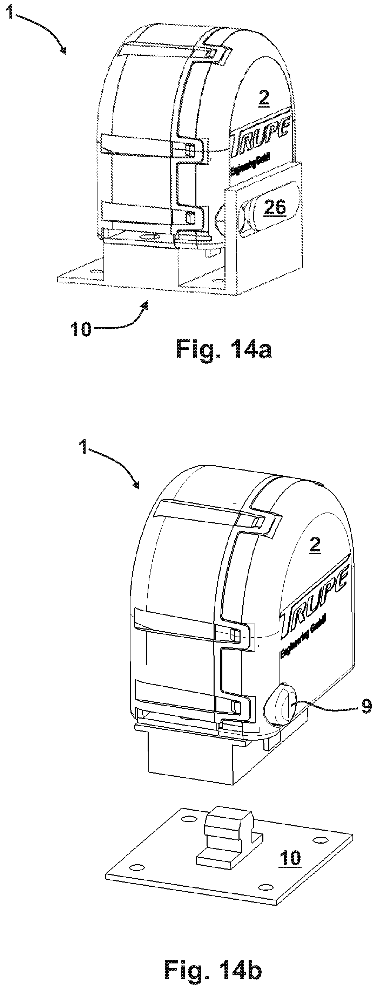

Fig. 14 und Fig. 14a zeigen einen Fig. 12 ähnlichen Gurtaufroller 1 samt Adapter 10, wobei jedoch das Koppelelement 5 nicht wie in Fig. 12 horizontal bzw. parallel zu einer Bodenfläche des Gurtaufrollers 1 in den Adapter 10 einführbar ist, welcher somit hier das Gegenstück bildet, sondern vertikal. Entsprechend ist hier wieder ein Lösen des Gehäuses 2 vom Gegenstück durch Betätigung einer Verriegelung 28 möglich.

Fig. 14b zeigt einen den Fig. 14 und 14a entsprechenden Gurtaufroller 1, wobei jedoch die Verriegelung 28 im Gehäuse 2 angeordnet ist. Entsprechend weist hier das Gegenstück am Adapter 10 einen Hinterschnitt 11 auf.

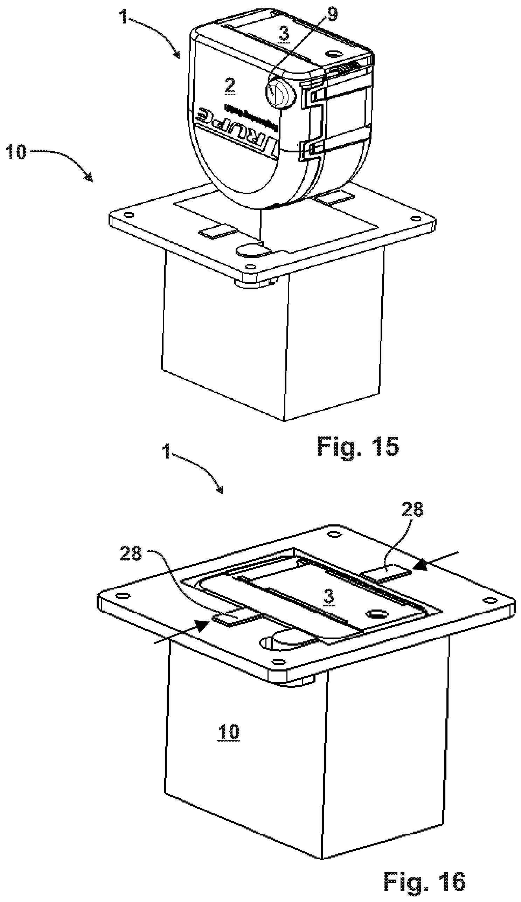

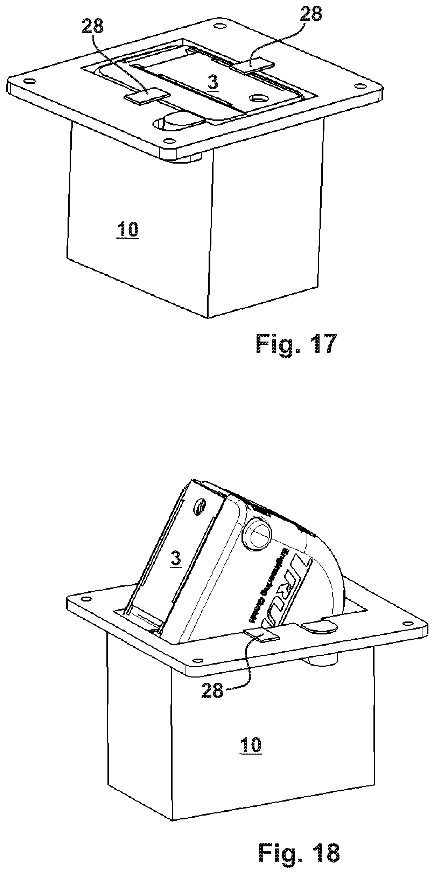

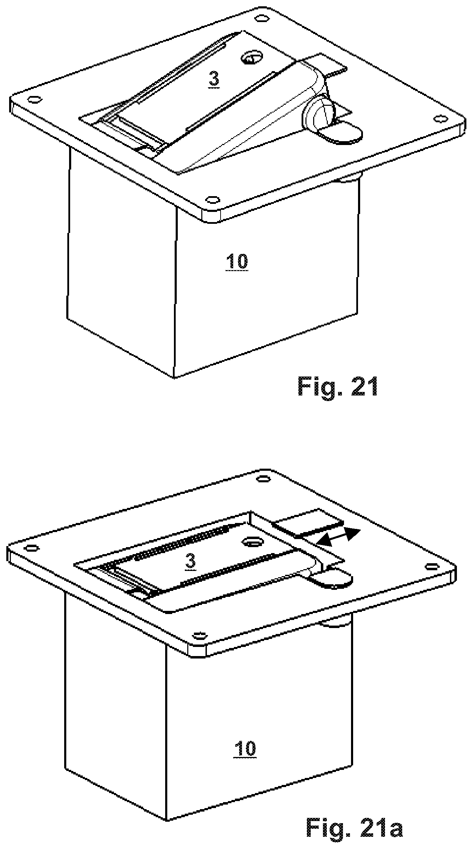

Fig. 15 bis 21a zeigen weitere erfindungsgemäße Gurtaufroller 1, welche lösbar mit einem eine Aufnahme für den Gurtaufroller 1 aufweisenden Adapter 10 verbunden sind, welcher Adapter 10 somit hier das Gegenstück bildet. Dadurch kann der Gurtaufroller 1 im Gegenstück einerseits versenkt werden, wenn dieser nicht benötigt wird. Andererseits ist es möglich, den Gurtaufroller 1 wie in Fig. 18, 19 und 21 ersichtlich auszuschwenken, sodass ein Gurt 3 entnommen werden kann. Bei diesen Ausführungsformen ist das Koppelelement 5 durch zwei zylinderförmige Zapfen gebildet, welche mit entsprechenden Ausnehmungen 12 im Adapter 10 zusammenwirken und somit eine schwenkbare Verbindung zwischen Gurtaufroller 1 und Adapter 10 ermöglichen. Dadurch ist eine besonders platzsparende Anordnung des Gurtaufrollers 1 beispielsweise in einem Fahrzeug ermöglicht. Um den Gurtaufroller 1 hier im Adapter 10 zu fixieren, welcher das Gegenstück zum Koppelelement 5 am Gurtaufroller 1 bildet, sind am Adapter 10 verschiebbare Verriegelungen 28 vorgesehen.

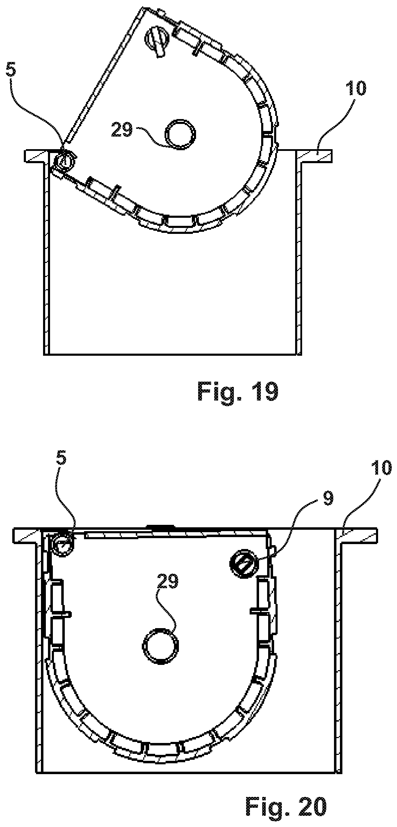

In den in Fig. 19 und 20 dargestellten Schnitten durch den Gurtaufroller 1 ist auch die Rolle 29 ersichtlich, auf welcher der Gurt 3 aufgerollt ist. Diese Rolle 29 ist üblicherweise mit einer eingerollten Blattfeder 30 mit dem Gehäuse 2 verbunden, sodass die Rolle 29 durch die Blattfeder 30 rotiert werden kann, um einen ausgerollten Gurt 3 mittels der Blattfeder 30 aufzurollen.

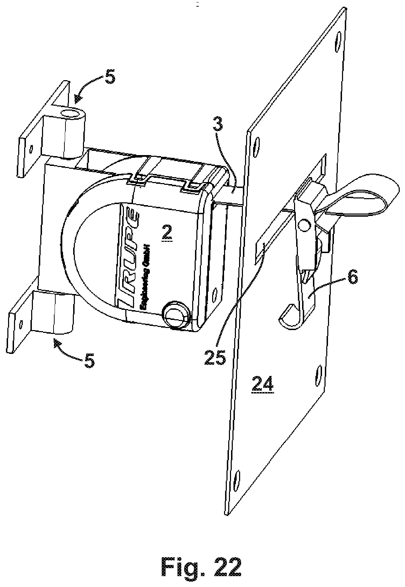

Fig. 22 zeigt ein weiteres Ausführungsbeispiel eines Gurtaufrollers 1, welcher hier hinter einer Blende 24 in einem Fahrzeug angeordnet ist. Das Koppelelement 5 wird hier durch zwei koaxial angeordnete Zylinder gebildet, welche mit korrespondierenden Gegenstücken zusammenwirken, die jeweils hohlzylindrische Formen aufweist, sodass der Gurtaufroller 1 relativ zu dem Gegenstück schwenkbar ist. Der Gurtaufroller 1 ist somit von einem Fahrzeug aus nicht ersichtlich, sondern ist vom Fahrzeug bzw. für einen Benutzer lediglich der aus einer Öffnung 25 der Blende 24 ragende Gurt 3 ersichtlich, welcher aus der Blende 24 gezogen werden kann, beispielsweise um Ladegut zu fixieren. Endseitig am Gurt 3 ist auch hier ein Haken 6 vorgesehen.

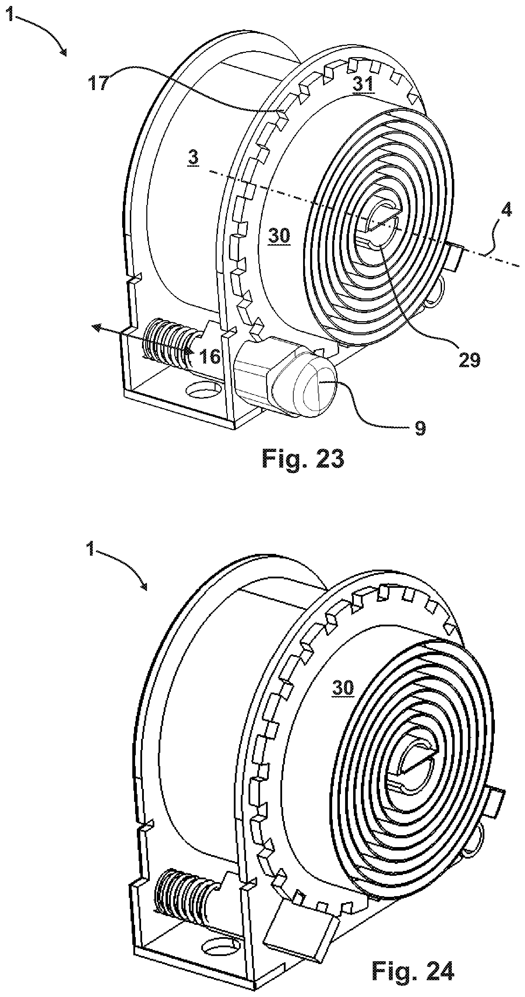

Fig. 23 und 24 zeigen ein Innenleben eines erfindungsgemäßen Gurtaufrollers 1. Ersichtlich ist, dass der an einer um eine Achse 4 drehbar mit dem Gehäuse 2 verbundenen Rolle 29 angeordnete Gurt 3 gegenüber dem Gehäuse 2 mit einer Blattfeder 30 vorgespannt ist, sodass der Gurt 3 durch die Blattfeder 30 in das Gehäuse 2 gezogen wird. Um eine Position des Gurtes 3 fixieren zu können, ist mit der Rolle 29 verbunden eine Scheibe 31 mit einem umfangseitigen Rechteckprofil 17 vorgesehen, in welches Rechteckprofil 17 ein Schwert 16 in einer ersten Position eingreift. Das Schwert 16 ist relativ zum Gehäuse 2 bzw. relativ zur Scheibe 31 translatorisch parallel zur Achse 4 bewegbar, sodass das Schwert 16 in eine zweite Position bringbar ist, in welcher das Schwert 16 nicht mehr in das Rechteckprofil 17 eingreift und somit eine Bewegung der Scheibe 31 und damit des Gurtes 3 um die Achse 4 freigegeben ist. Das Schwert 16 kann durch eine Betätigung eines Betätigungselementes 9 von der ersten Position in die zweite Position bewegt werden, wodurch der Gurt 3 gelöst bzw. fixiert werden kann. Es kann auch vorgesehen sein, dass dieses Betätigungselement 9 ebenfalls mit einem hier nicht dargestellten Koppelelement 5 verbunden ist, um gleichzeitig das Koppelelement 5 von einer Ruheposition in eine Arbeitsposition zu bringen und eine Bewegbarkeit des Gurtes 3 relativ zum Gehäuse 2 zu ermöglichen bzw. zu blockieren.

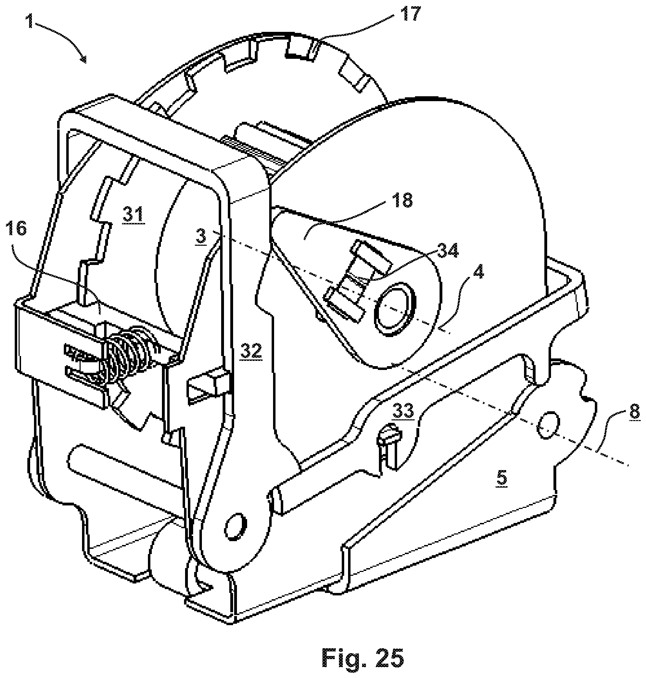

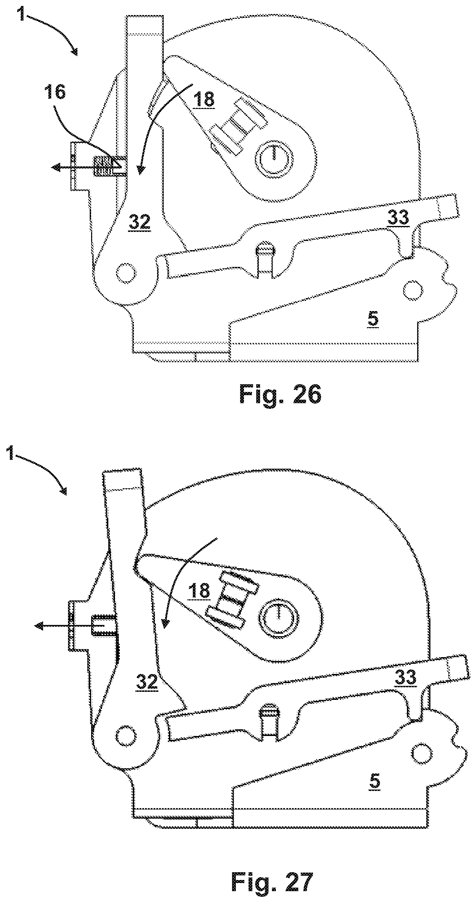

Fig. 25 bis 31 zeigen ein weiteres Ausführungsbeispiel, wobei wiederum ein Schwert 16 dargestellt ist, welches in ein Rechteckprofil 17 eingreift, welches Rechteckprofil 17 wiederum über eine Scheibe 31 mit einer Rolle 29 verbunden ist, an welcher der Gurt 3 positioniert ist. Im Unterschied zu dem in Fig. 23 und 24 dargestellten Ausführungsbeispiel wird hier das Schwert 16 nicht durch eine translatorische Bewegung parallel zur Achse 4 bewegt, sondern durch einen Arm 18, welcher bei einem Ausziehen des Gurtes 3 von der in Fig. 26 dargestellten Position in die in Fig. 27 dargestellte Position bewegt wird und dabei auf einem Hebel 32 wirkt, welcher Hebel 32 das Schwert 16 von einer ersten Position in eine zweite Position bewegt, wobei das Schwert 16 in der zweiten Position nicht mehr in Eingriff mit dem Rechteckprofil 17 ist und somit in dieser zweiten Position eine Bewegung des Gurtes 3 freigegeben ist.

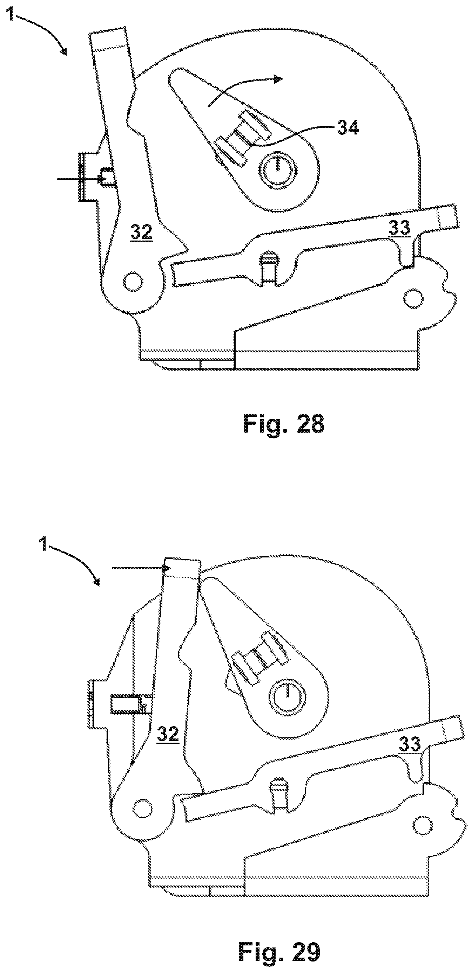

Fig. 28 zeigt eine Position des Armes 18 nach einer geringfügigen Zurückbewegung des Gurtes 3. So nimmt die Scheibe 31 über eine Mitnehmerfeder 34 den Arm 18 dann in einer Gegenrichtung, hier im Uhrzeigersinn, mit, wodurch der Arm 18 den Hebel 32 nicht mehr auf das Schwert 16 drückt und das Schwert 16, welches durch eine Feder radial belastet ist, radial nach innen bewegt wird, anschließend wieder in das Rechteckprofil 17 eingreift und somit den Gurt 3 blockiert.

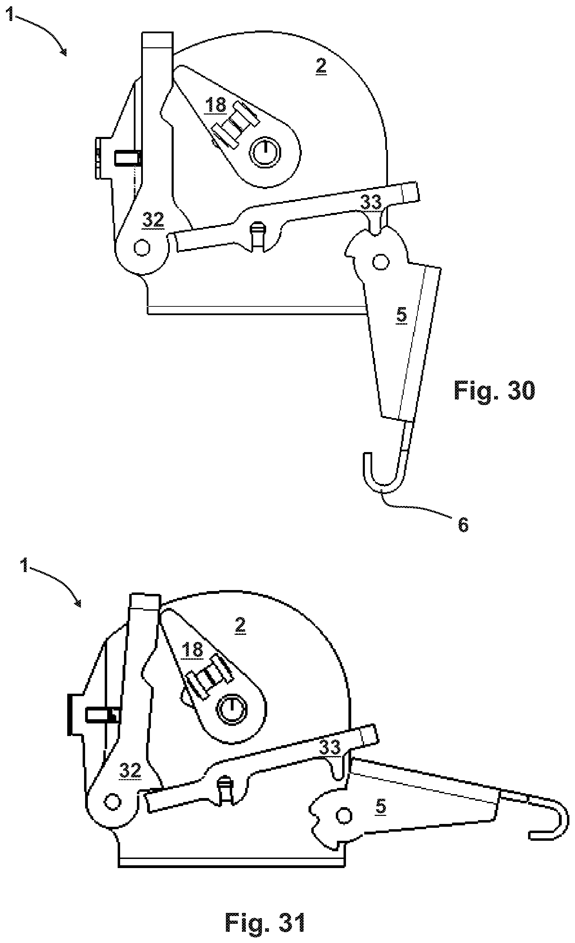

Weiter wirkt der Hebel 32 bei einer Bewegung in entgegengesetzter Richtung wie in Fig. 29 bis 31 dargestellt über einen Koppelungshebel 33 auf eine Verriegelung 28 des Koppelelementes 5. So kann durch eine entsprechende Bewegung des Hebels 32 über den Koppelungshebel 33 eine Verriegelung 28 des Koppelelementes 5 gelöst werden, sodass das Koppelelement 5 aus der Ruheposition in die Arbeitsposition bewegt wird, üblicherweise auch hier mittels einer Feder, welche in der Ruheposition in Richtung der Arbeitsposition auf das Koppelelement 5 Kraft ausübt. Wie hier dargestellt weist das Koppelelement 5 eine radiale Vertiefung auf, welche mit dem Koppelungshebel 33 derart zusammenwirkt, dass das Koppelelement 5 auch in einer in Fig. 30 dargestellten Position zwischen der Ruheposition und der Arbeitsposition fixierbar ist.

Eine Bewegung des Armes 18 kann durch ein Ausziehen des Gurtes 3 beispielsweise bewirkt werden, indem die Rolle 29 bzw. die Scheibe 31 auf die Mitnehmerfeder 34 im Arm 18 wirkt, welche hier sozusagen den Arm 18 in Ausziehrichtung mitnimmt, wodurch dieser in einen entsprechenden Vorsprung im Hebel 32 einrastet, sodass der Hebel 32 in einer entsprechenden Position fixiert ist und das Schwert 16 in der zweiten Position hält.

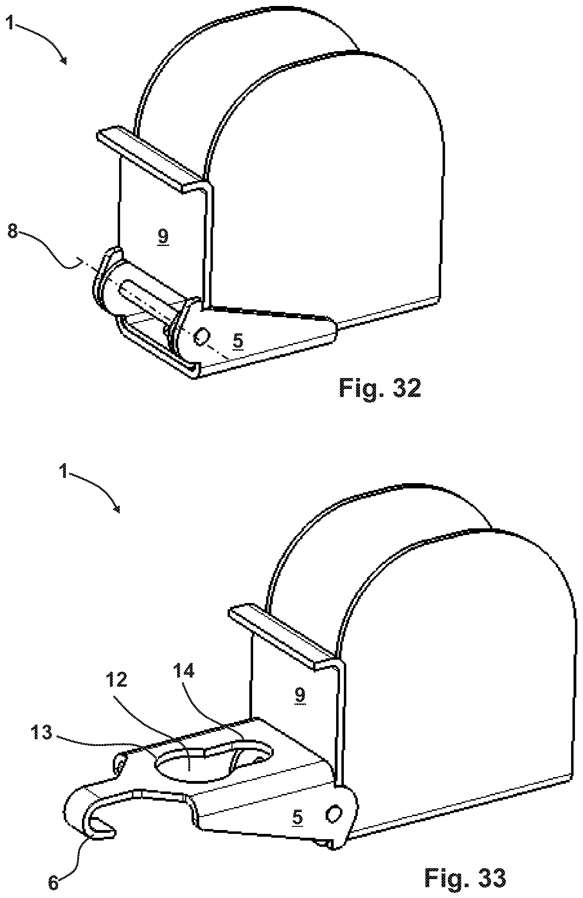

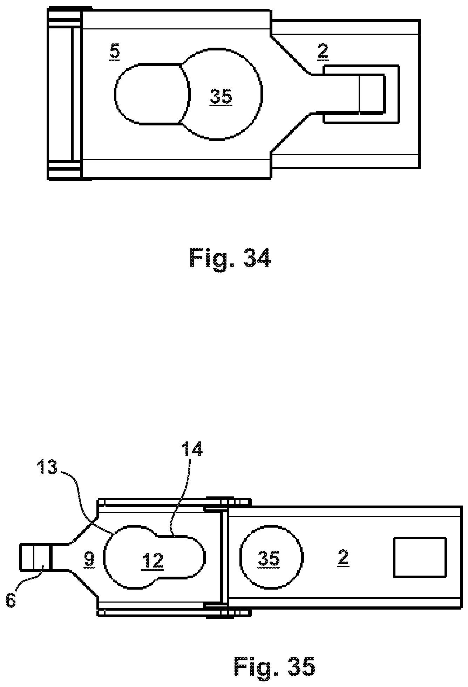

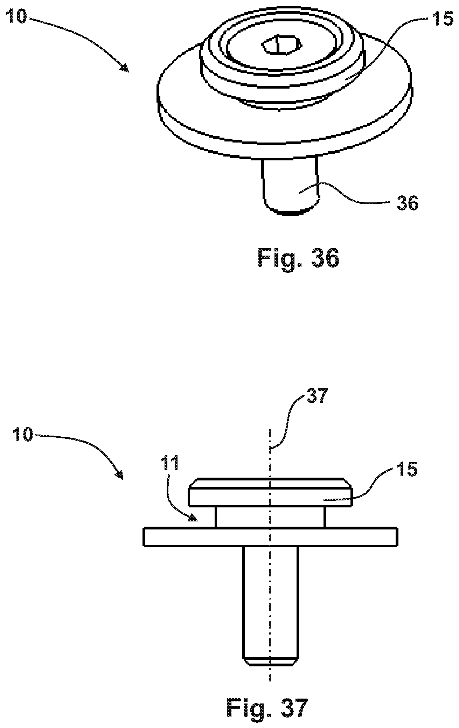

Fig. 32 bis 45 zeigen ein weiteres Ausführungsbeispiel eines Gurtaufrollers 1, teilweise mit Adapter 10, wobei das Koppelelement 5 hier nicht nur einen Haken 6, sondern auch eine Ausnehmung 12 aufweist. Die Ausnehmung 12 weist einen größeren Einführbereich 13 und einen kleineren Fixierbereich 14 auf, wobei der Einführbereich 13 eines entsprechend zum Einführen eines entsprechend großen Adapters 10 ausgebildet ist, welcher einen zylindrischen Bereich 15 mit einem dem Einführbereich 13 entsprechenden Durchmesser und einen Hinterschnitt 11 aufweist, sodass der Adapter 10 in den Einführbereich 13 eingeführt und anschließend in den Fixierbereich 14 geschoben werden kann, in welchem der Adapter 10 dann fixiert ist, zumal der Fixierbereich 14 kleiner als der zylindrische Bereich 15 ausgebildet ist. Ein entsprechender Adapter 10 ist in Fig. 36 und 37 im Detail ersichtlich. Wie dargestellt weist der Adapter 10 ein unteres Ende 36 auf, welches beispielsweise ein Gewinde aufweisen kann, um in eine Fahrzeugkarosserie eingeschraubt zu werden. Weiter weist der Adapter 10 einen zylindrischen Bereich 15 auf, welcher mit einem Durchmesser des Einführbereiches 13 korrespondiert. Darüber hinaus ist zwischen dem ersten Ende 36 des Adapters 10 und dem zylindrischen Bereich 15 ein Hinterschnitt 11 vorgesehen, welcher mit dem Fixierbereich 14 korrespondiert, sodass der Adapter 10 in den Einführbereich 13 eingeschoben, anschließend in den Fixierbereich 14 verschoben werden kann, wodurch dieser in Einschubrichtung relativ zum Koppelelement 5 fixiert ist.

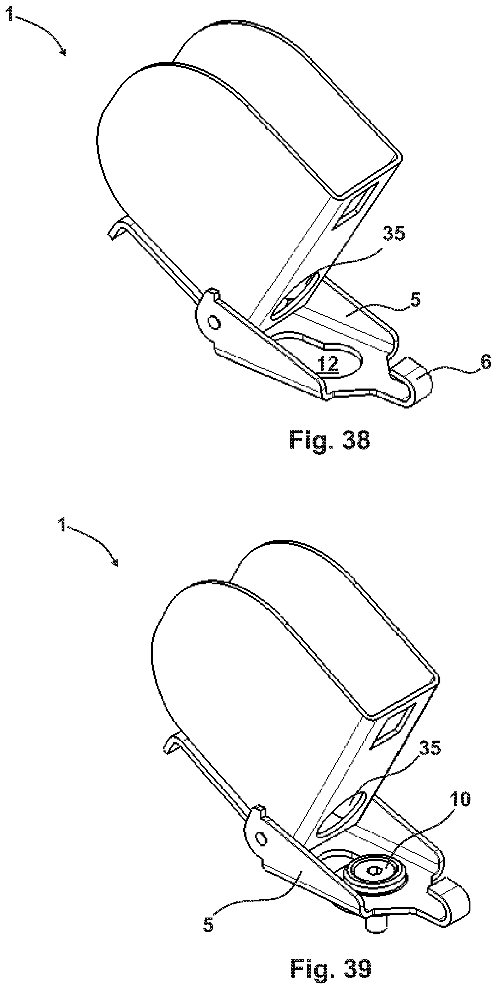

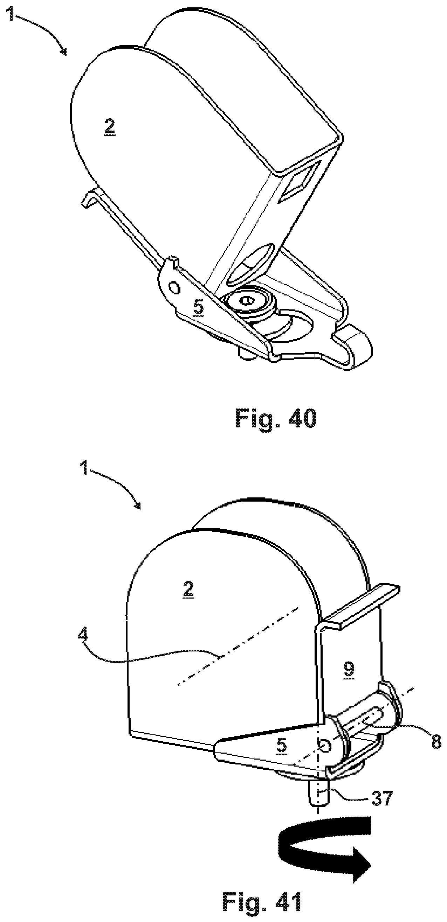

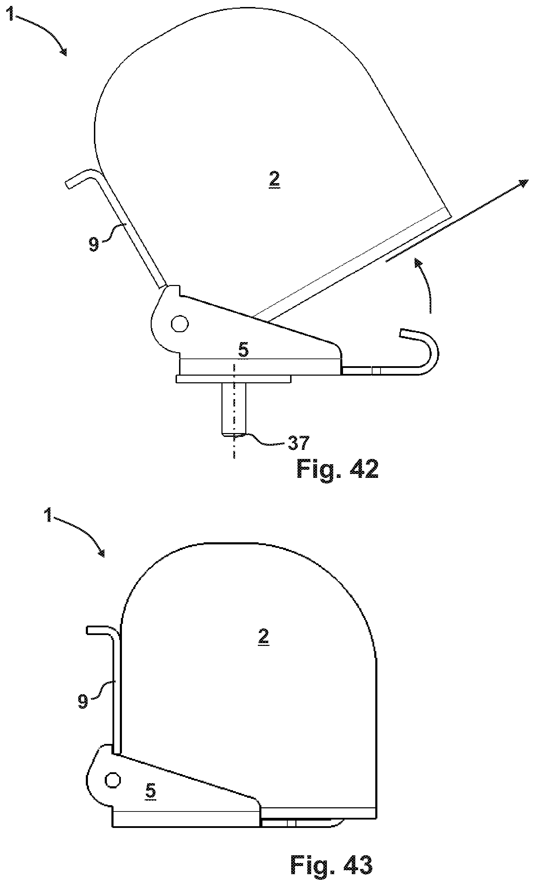

Das Gehäuse 2 weist wie in Fig. 38 ersichtlich hier eine mit dem zylindrischen Bereich 15 des Adapters 10 korrespondierende Gehäuseausnehmung 35 auf, mittels welcher der Adapter 10 in der entsprechenden Fixierposition fixierbar ist, wenn das Koppelelement 5 in der Ruheposition befindlich ist, wie dies in Fig. 41 und 43 dargestellt ist. Hierzu wird der Adapter 10 zunächst in den Einführbereich 13 der Ausnehmung 12 eingeführt, wodurch sich die in Fig. 39 dargestellte Situation ergibt, wonach der Adapter 10 in der Ausnehmung 12 vom Einführbereich 13 in den Fixierbereich 14 verschoben wird, wodurch sich die in Fig. 40 dargestellte Situation ergibt. Anschließend wird das Gehäuse 2 auf das Koppelelement 5 abgesenkt bzw. das Koppelelement 5 in die Ruheposition bewegt, sodass sich die in Fig. 41 dargestellte Situation ergibt. Aufgrund der rotationssymmetrischen Ausbildung des Adapters 10 ist der Gurtaufroller 1 in dieser Situation um eine vertikale bzw. zur Achse 4 normale Adapterachse 37 drehbar.

Wie ersichtlich ist aufgrund der rotationsymmetrischen Ausbildung des Adapters 10 eine Rotation des Gurtaufrollers 1 um eine Achse 4 des Adapters 10 ermöglicht, wodurch sich der Gurtaufroller 1 bei entsprechender Anordnung einfach in Kraftausrichtung ausrichten kann. Weiter kann der Gurtaufroller über ein Hakengelenk, welches sich durch die schwenkbare Anordnung des Koppelelementes 5 und der Ankoppelung des Gurtaufrollers 1 an einen Untergrund über den Adapter 10 und das Koppelelement 5 ergibt, aufgeschwenkt werden. Dies ermöglicht eine besonders gute Ausrichtung des Gurtaufrollers entlang einer Kraftrichtung wie in Fig. 42 dargestellt.

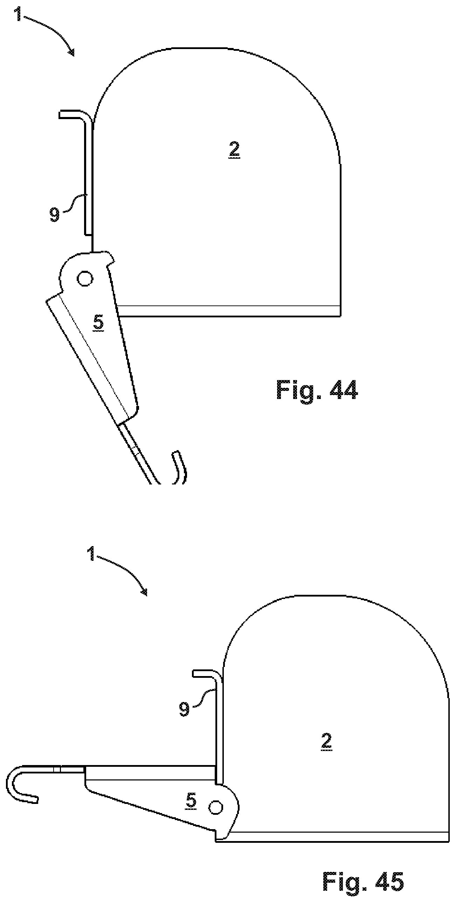

Auch bei den in den Fig. 32 bis 45 dargestellten Gurtaufrollern 1 ist das Koppelelement 5 durch eine Feder vorgespannt und mittels Betätigung eines Betätigungselementes 9 von der Ruheposition in die in Fig. 33 und 45 dargestellte Arbeitsposition bringbar. Hier ist das Betätigungselement 9 durch ein seitlich am Gehäuse 2 angebrachtes plattenförmiges Element gebildet, welches eine Bewegung des Koppelelementes 5 in der Ruheposition gegen eine Federkraft blockieren kann, sodass durch eine Bewegung nach oben wie in Fig. 44 dargestellt, die Bewegung freigegeben wird und das Koppelelement 5 durch die Feder in die in Fig. 45 dargestellte Arbeitsposition bewegbar ist.

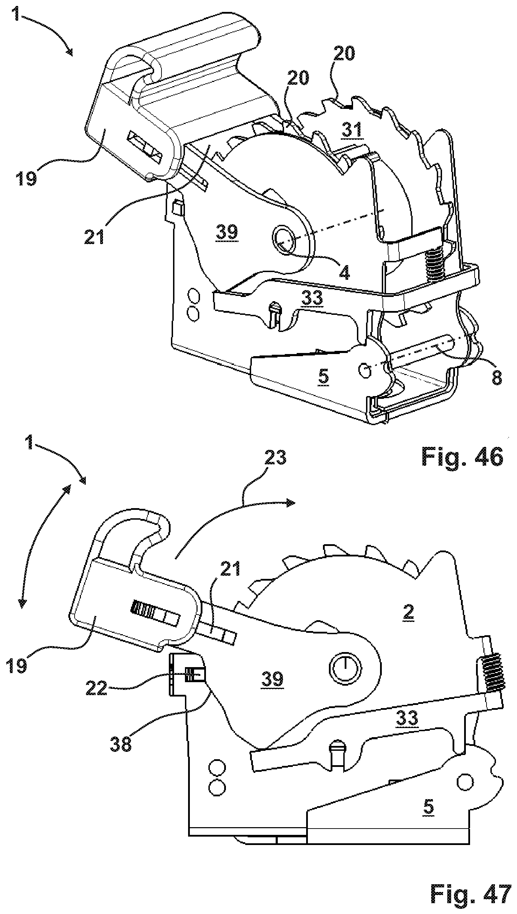

Fig. 46 bis 54 zeigen ein weiteres Ausführungsbeispiel eines Gurtaufrollers 1, welcher hier einen Ratschenmechanismus aufweist. Der Ratschenmechanismus weist eine um die Achse 4 drehbar mit dem Gehäuse 2 verbundenen Ratschenlagerung 39 auf, an welcher Ratschenlagerung 39 ein Ratschenhebel 19 radial bewegbar angeordnet ist. Weiter ist an der Ratschenlagerung 39 ein in einer Radialrichtung bewegbar angeordnetes und mittels einer Feder vorbelastetes Ratschenschwert 21 vorgesehen, welches Ratschenschwert 21 mit einem Sägezahnprofil 20 zusammenwirkt, wobei das Sägezahnprofil 20 an zwei Scheiben 31 angeordnet ist, welche wiederum mit einer Rolle 29 gekoppelt sind, an welcher der Gurt 3 befestigt ist, sodass durch eine Betätigung der Scheiben 31 mit dem Sägezahnprofil 20 über das Ratschenschwert 21 eine Bewegung des Gurtes 3 relativ zum Gehäuse 2 möglich ist, also ein auf- bzw. abrollen des Gurtes 3. Das Ratschenschwert 21 ist durch den Ratschenhebel 19 betätigbar, sodass durch eine Bewegung des Ratschenhebels 19 nach außen das Ratschenschwert 21 angehoben werden kann, um dieses über das Sägezahnprofil 20 zu bewegen.

Der Ratschenhebel 19 weist über das Spannen des Gurtes 3 mittels einer Betätigung in Spannrichtung 23, in der in Fig. 47 dargestellten Situation im Uhrzeigersinn, eine weitere Funktion auf. So kann der Ratschenhebel 19 auch entgegen der Spannrichtung 23, als dem Uhrzeigersinn entgegengesetzt in Fig. 47, betätigt werden, wobei dann mittels einer Kontur 38 an der Ratschenlagerung 39 ein Verriegelungsschwert 22 radial nach außen bewegt wird, welches Verriegelungsschwert 22 ebenfalls in das Sägezahnprofil 20 eingreifen kann. Mit einer Bewegung des Ratschenhebels 19 entgegen dem Uhrzeigersinn kann somit der Gurt 3 freigegeben werden, wodurch dieser beispielsweise mittels einer Blattfeder 30 aufgerollt oder aus dem Gehäuse 2 gezogen werden kann.

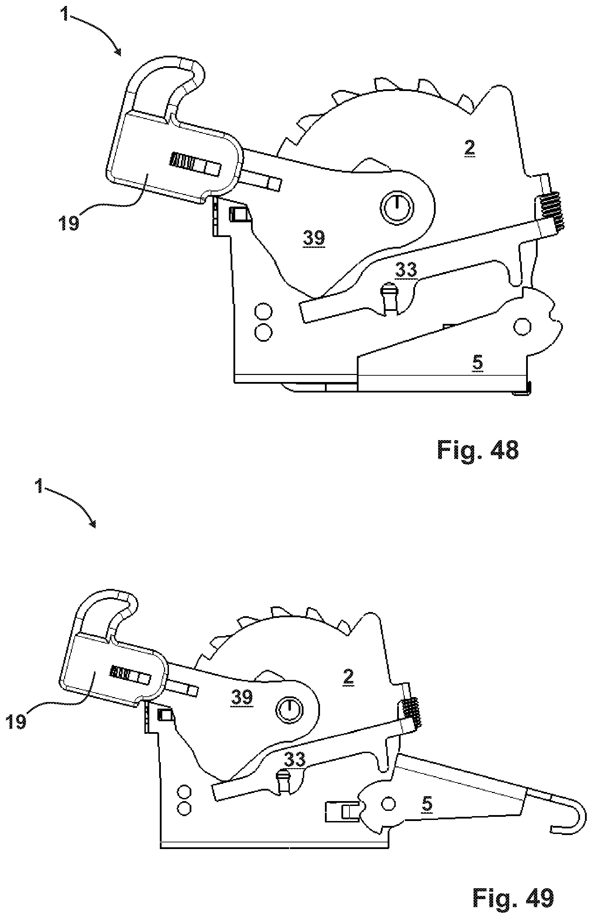

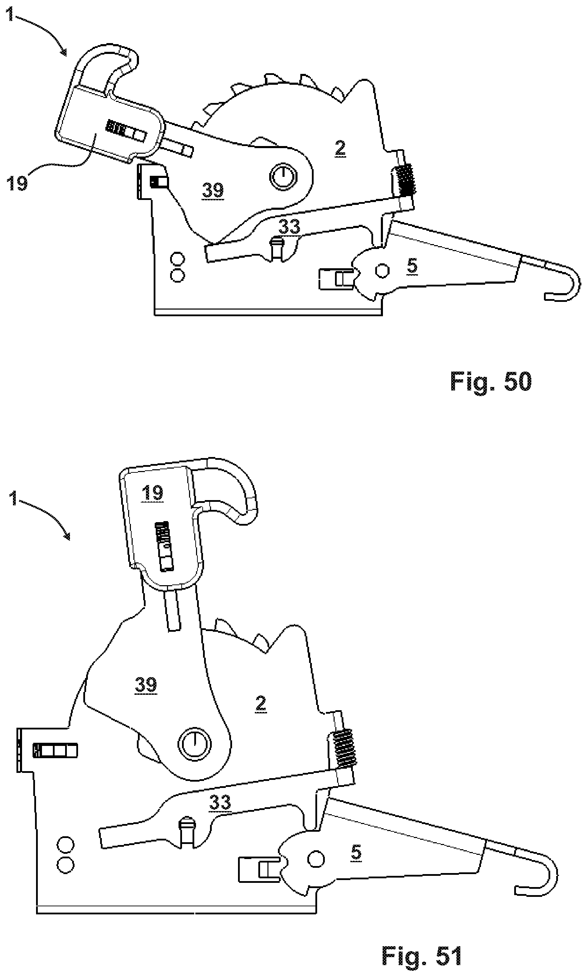

Wie in Fig. 47 bis 49 ersichtlich wirkt der Ratschenhebel 19 darüber hinaus auch auf einen auf das Koppelelement 5 wirkenden Koppelungshebel 33, welcher das Koppelelement 5 in der in Fig. 47 dargestellten Ruheposition gegen eine Federkraft fixiert, sodass durch Betätigung des Ratschenhebels 19 entgegen dem Uhrzeigersinn der Koppelungshebel 33 angehoben, das Koppelelement 5 freigegeben und mittels einer Feder aus der Ruheposition in die Arbeitsposition bewegt wird, wie in Fig. 49 und 50 dargestellt.

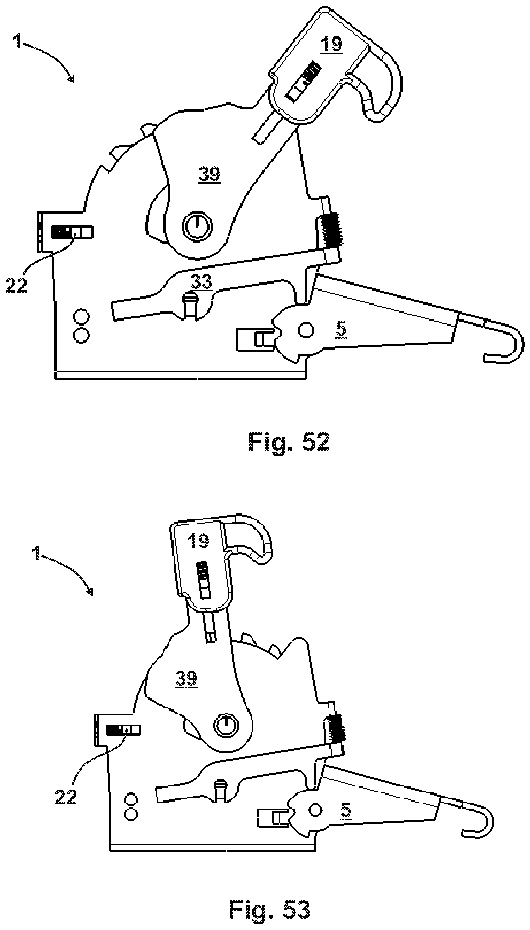

Fig. 51 und 52 zeigen den Ratschenmechanismus beim Spannen des Gurtes 3, wobei der Ratschenhebel 19 im Uhrzeigersinn betätigt wird, sodass das Ratschenschwert 21 in eine steile Flanke des Sägezahnprofils 20 eingreift, die Scheiben 31 samt der Rolle 29 somit ebenfalls im Uhrzeigersinn relativ zum Gehäuse 2 bewegt werden, wodurch der Gurt 3 gespannt wird.

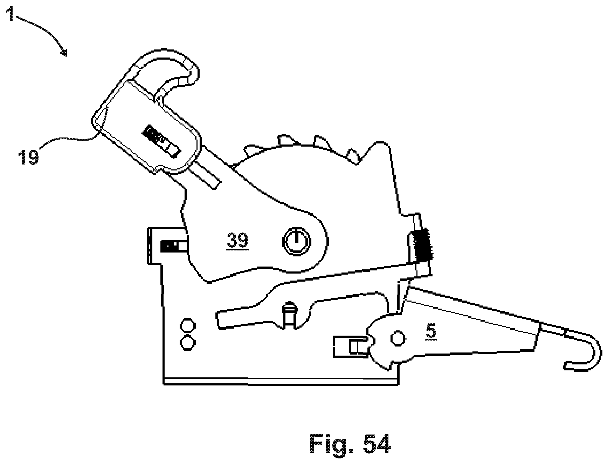

Ein Bewegen des Ratschenhebels 19 entgegen dem Uhrzeigersinn bzw. entgegen der Spannrichtung 23 wie in Fig. 53 und 54 dargestellt ist möglich, ohne den Gurt 3 zu bewegen. So ist das Sägezahnprofil 20 gegen eine Zurückbewegung in diesem Fall durch das in das Sägezahnprofil 20 eingreifende Verriegelungsschwert 22 blockiert und rutscht das Ratschenschwert 21 aufgrund der Feder und der flacheren Flanke des Sägezahnprofils 20 bei einer Bewegung entgegen den Uhrzeigersinn über das Sägezahnprofil 20, sodass der Ratschenhebel 19 im Uhrzeigersinn nur gemeinsam mit dem Sägezahnprofil 20 und dem Gurt 3 bewegbar ist, während der Ratschenhebel 19 entgegen dem Uhrzeigersinn unabhängig vom Gurt 3 und dem Sägezahnprofil 20 bewegbar ist.

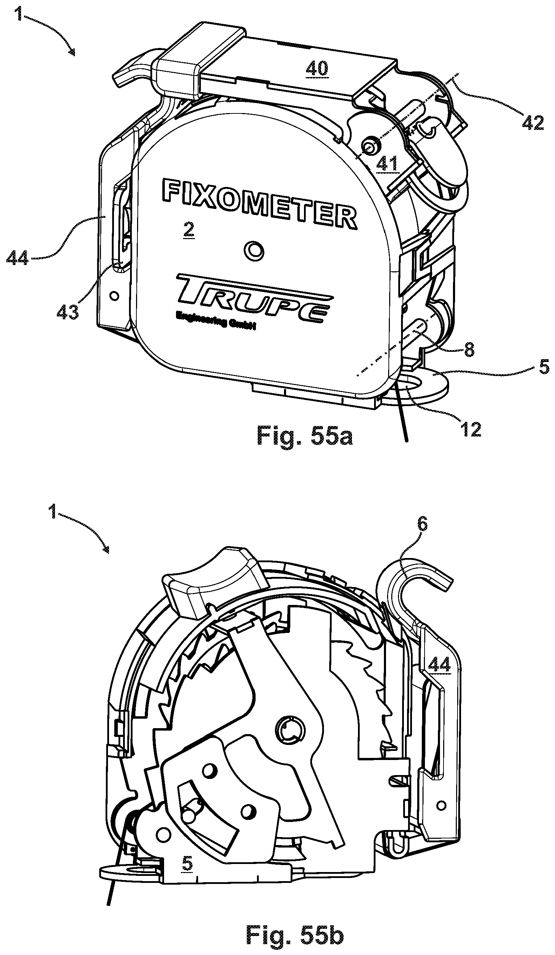

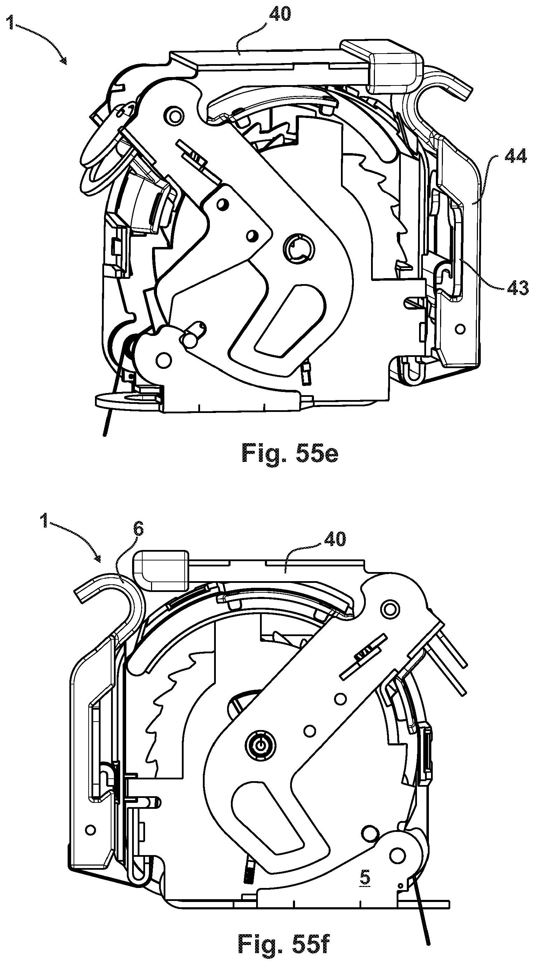

Fig. 55a bis 55f zeigen ein weiteres Ausführungsbeispiel eines Gurtaufrollers 1. Dieser Gurtaufroller 1 weist ebenfalls ein Gehäuse 2 mit einem aufwickelbaren Gurt 3 auf, wobei mit dem Gehäuse 2 ein Koppelelement 5 um eine Schwenkachse 8 schwenkbar verbunden ist. Das Koppelelement 5 weist eine Ausnehmung 12 zur Aufnahme eins Adapters 10 auf, wobei der Adapter 10 in der Regel rotationssymmetrisch ausgebildet ist, sodass das Koppelelement 5 relativ zum Adapter 10 drehbar ist. Bei Anordnung an einem entsprechenden Adapter 10 ergibt sich somit eine Schwenkbarkeit des Gehäuses 2 relativ zum Adapter 10 einerseits um die Schwenkachse 8 und andererseits um eine dazu etwa normale weitere Achse 4, welche der Rotationsachse des Adapters 10 entspricht.

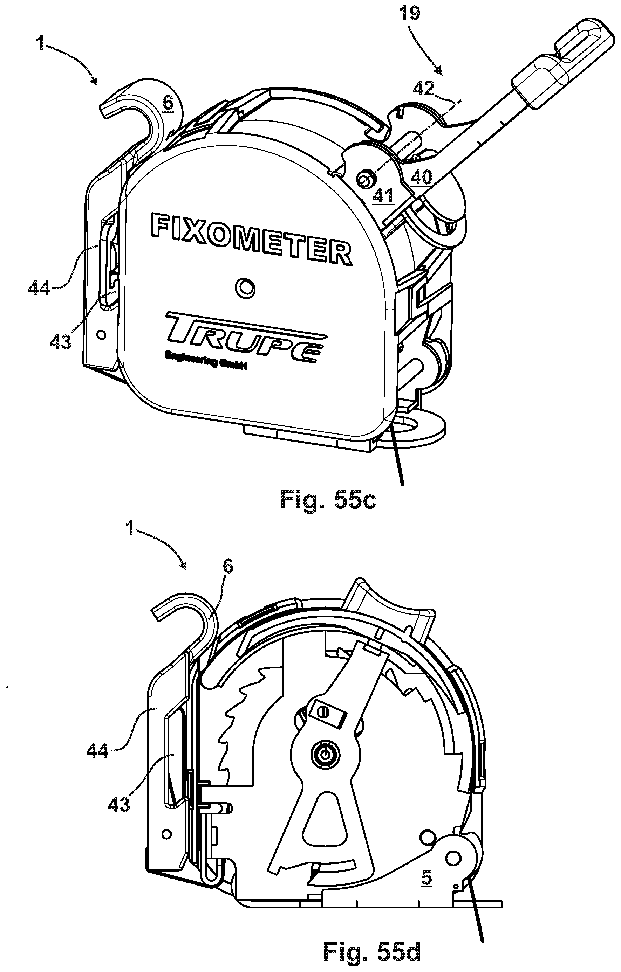

Ferner weist das in den Fig. 55a bis 55f dargestellte Ausführungsbeispiel einen ausklappbaren Ratschenhebel 19 auf. Dieser wird durch einen zweigeteilten Ratschenhebel 19 erreicht, wodurch sich ein inneres Ratschenhebelteil 41 und ein äußeres Ratschenhebelteil 40 ergeben, welche um eine zur Achse 4 etwa parallele Ratschenhebelschwenkachse 42 schwenkbar verbunden sind. Fig. 55a, 55b sowie 55d bis 55f zeigen dabei den Ratschenhebel in einem eingeschwenkten Zustand, sodass sich ein kleiner Bauraum des Gurtaufrollers ergibt. Fig. 55c zeigt den Ratschenhebel in ausgeschwenktem Zustand, wodurch eine Betätigung mit hohem Drehmoment mit geringer Kraftanstrengung ermöglicht ist.

Weiter weist dieser Gurtaufroller 1 ein am Gurt 3 endseitig befestigtes Ringelement 43 auf, welches formschlüssig und lösbar an zwei Positionen mit einem Gurtfixierelement 44 verbunden ist, welches Gurtfixierelement 44 eine Gurtfixierelementausnehmung 46 aufweist, durch welche der Gurt 3 geführt ist. Fig. 55a bis 55f zeigen dabei eine erste Position des Ringelementes 43 im Gurtfixierelement 44, wobei das mit dem Ringelement 43 verbundene Gurtende im Bereich der Gurtfixierelementausnehmung 46 angeordnet ist.

Das Gurtfixierelement 44 weist ferner endseitig einen Haken 6 auf, in welchem das Ringelement 43 eingehakt bzw. mit welchem das Ringelement 43 formschlüssig verbunden werden kann, sodass sich eine zweite Position für eine Verbindung von Ringelement 43 und Gurtfixierelement 44 ergibt.

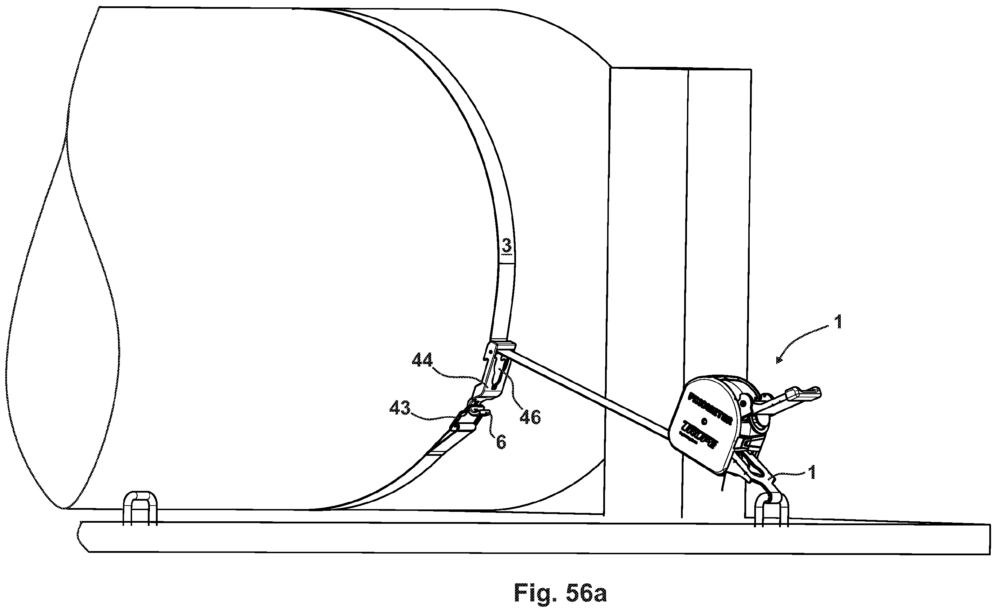

Dadurch kann der Gurtaufroller 1 auch dann zur Fixierung eines Gegenstandes eingesetzt werden, wenn der Gurtaufroller 1 nur über das Gehäuse 2 mit einem Untergrund bzw. einem Fahrzeug verbunden ist. So kann mittels des Gurtfixierelementes 44, durch welches der Gurt 3 geführt wird, und des Ringelementes 43, welches ein Gurtende mit dem Gurtfixierelement 44 verbindet, eine Gurtschlaufe bzw. Gurtschlinge gebildet werden, in welcher Gurtschlinge ein Gegenstand befestigt werden kann. Eine derartige Situation ist in Fig. 56a dargestellt.

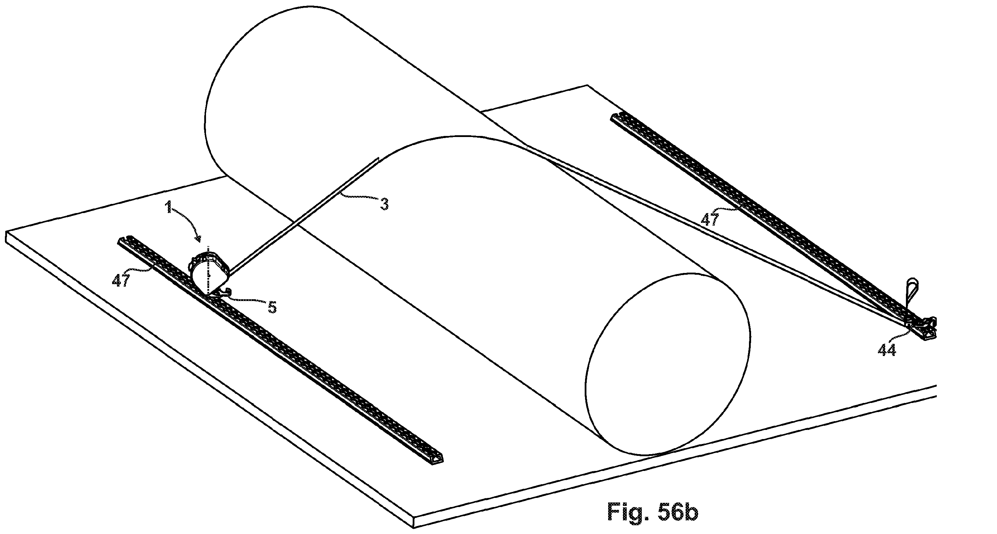

Fig. 56b zeigt wie ein Gegenstand mit dem Gurtaufroller 1 der Fig. 55a bis 55f an zwei Airlineschienen 47 befestigt werden kann. Dabei wird das Gehäuse 2 einerseits mittels des Koppelelementes 5 mit einem Adapter 10 in einer ersten Airlineschine verbunden und das Gurtende andererseits über das Gurtfixierelement 44, welches eine mit einem Adapter 10 in der zweiten Airlineschiene 47 korrespondierende Gurtfixierelementausnehmung 46 aufweist, mit der zweiten Airlineschiene 47. Zum Spannen des Gurtes 3 kann auch hier die ausklappbare Ratsche eingesetzt werden, sodass sich eine stabile Fixierung des Gegenstandes ergibt.

Wie sich insbesondere aus Fig. 55f ergibt kann der äußere Ratschenhebelteil an das Gehäuse 2 angeschwenkt werden. Weiter kann das Gurtfixierelement 44 am Gehäuse 2 befestigt werden, beispielsweise formschlüssig. Dadurch ergibt sich ein sehr kompakter und aufgeräumter Zustand des Gurtaufrollers 1, wenn dieser nicht zum Fixieren von Gegenständen eingesetzt wird. Insbesondere ragen dabei keine losen Gurtenden aus dem Gehäuse 2 hervor, was ebenfalls einen Unterschied zu Gurtaufrollern 1 des Standes der Technik bildet.

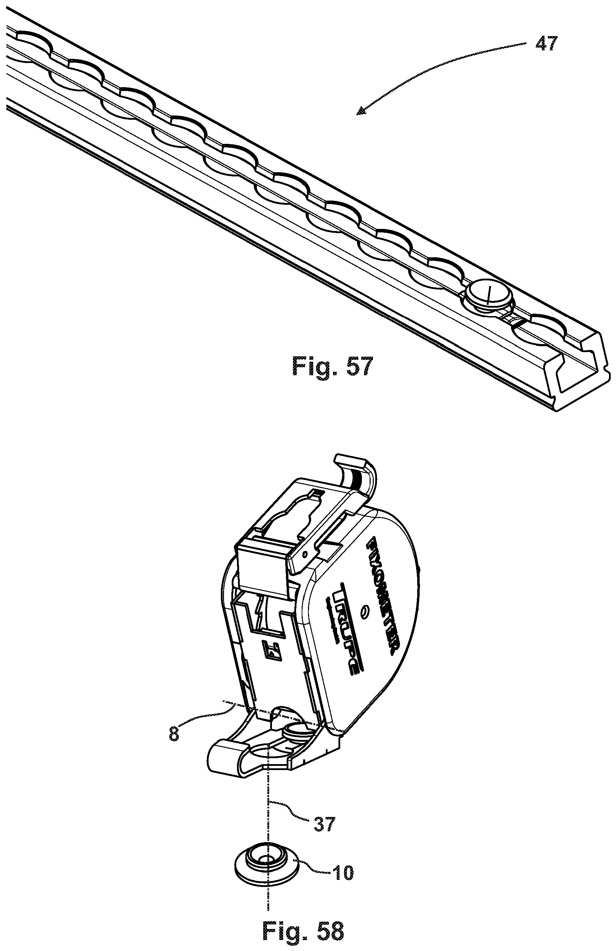

Fig. 57 zeigt die Airlineschiene 47 mit dem Adapter 10, welche einen roationssymmetrischen Kopf aufweist und federbelastet in der Airlineschiene 47 angeordnet ist, sodass dieser durch einen Druck nach unten in der Airlineschiene 47 bewegt werden kann und andernfalls durch die Feder nach außen gedrückt und somit eine Position relativ zur Airlineschine formschlüssig fixiert ist.

Die Airlineschienen 47 können besonders leicht an beliebigen Positionen befestigt werden, beispielsweise in einem Fahrzeug, um mittels des Gurtaufrollers 1 Gegenstände leicht und an unterschiedlichen Positionen befestigen zu können.

Fig. 58 zeigt den Gurtaufroller 1 der Fig. 55a bis 55f samt einem Adapter 10. In dieser Abbildung ist auch die Adapterachse 37 dargestellt, um welche das Gehäuse 2 bzw. das Koppelelement 5 relativ zum Adapter 10 gedreht werden kann, um in Verbindung mit der Schwenkachse 8 des Koppelelementes 5 eine Schwenkbarkeit des Gurtaufrollers 1 relativ zum Adapter 10 bzw. einem Untergrund um zwei Achsen 4 zu erreichen, welche Positionen wie die in Fig. 56b dargestellte erlaubt.

Ein erfindungsgemäßer Gurtaufroller 1 ermöglicht eine Befestigung von Ladegut insbesondere in einem Fahrzeug auf besonders einfache Weise. Der Gurtaufroller 1 ist einfach und platzsparend im Fahrzeug anbringbar.

## Patentansprüche

1. Gurtaufroller (1), aufweisend ein Gehäuse (2), in welchem ein Gurt (3) mittels einer Feder, insbesondere einer Blattfeder (30), um eine Achse (4) aufrollbar ist, wobei ein mit dem Gehäuse (2) verbundenes Koppelelement (5) vorgesehen ist, wobei das Koppelelement (5) insbesondere einen Haken (6) aufweist, durch welches Koppelelement (5) das Gehäuse (2) formschlüssig mit einem korrespondierenden Gegenstück, welches insbesondere in einem Fahrzeug befestigt ist, koppelbar ist, **dadurch gekennzeichnet, dass** das Koppelelement (5) von einer Ruheposition, in welcher das Koppelelement (5) flächig am Gehäuse (2) anliegt und nicht mit dem Gegenstück koppelbar ist, in eine Arbeitsposition bringbar ist, in welcher das Koppelelement (5) seitlich am Gehäuse (2) angeordnet ist und mit dem Gegenstück koppelbar ist, wobei das Koppelelement (5) in der Ruheposition gegen eine Halteeinrichtung mittels einer Feder federbelastet ist, wobei die Halteeinrichtung mittels eines Betätigungselementes (9) derart bewegbar ist, dass das Koppelelement (5) mittels der Feder aus der Ruheposition in die Arbeitsposition bewegbar ist.

2. Gurtaufroller (1) nach Anspruch 1, **dadurch gekennzeichnet, dass** das Koppelelement (5) translatorisch mit dem Gehäuse (2) verbunden ist, insbesondere entlang einer Verschieberichtung (7), welche normal zur Achse (4) ist.

3. Gurtaufroller (1) nach Anspruch 1 oder 2, **dadurch gekennzeichnet, dass** das Koppelelement (5) rotatorisch mit dem Gehäuse (2) verbunden ist, insbesondere um eine zur Achse (4) etwa parallele oder normale Schwenkachse (8).

4. Gurtaufroller (1) nach einem der Ansprüche 1 bis 3, **dadurch gekennzeichnet, dass** das Koppelelement (5) schwenkbar mit dem Gegenstück verbindbar ist, wobei das Koppelelement (5) insbesondere ein oder zwei zylinderförmige Elemente aufweist, welche mit entsprechenden Aufnahmen im Gegenstück, welches als Adapter (10) ausgebildet sein kann, korrespondiert.

5. Gurtaufroller (1) nach einem der Ansprüche 1 bis 4, **dadurch gekennzeichnet, dass** das Koppelelement (5) eine Ausnehmung (12) aufweist, in welche Ausnehmung (12) ein Adapter (10) mit einem Hinterschnitt (11) in einen Einführbereich (13) einführbar und durch eine Verschiebung in einen Fixierbereich (14) mittels des Hinterschnittes (11) fixierbar istwobei bevorzugt vorgesehen ist, dass das Gehäuse (2) eine mit dem Fixierbereich (14) korrespondierende Gehäuseausnehmung (35) aufweist, mittels welcher der Adapter (10) im Fixierbereich (14) fixierbar ist, insbesondere wenn das Koppelelement (5) in der Ruheposition ist.

6. Gurtaufroller (1) nach einem der Ansprüche 1 bis 5, **dadurch gekennzeichnet, dass** ein lösbar mit dem Koppelelement formschlüssig verbindbarer Adapter (10) vorgesehen ist, welcher an einem ersten Ende (36) mit einem Untergrund, insbesondere einer Fahrzeugkarosserie, verbindbar ist und einen zylindrischen Bereich (15) aufweist, welcher insbesondere in einen Einführbereich (13) einer Ausnehmung (12) einführbar ist, wobei zwischen dem zylindrischen Bereich (15) und dem ersten Ende (36) ein Hinterschnitt (11) vorgesehen ist, mit welchem der Adapter (10) insbesondere in einem Fixierbereich (14) fixierbar ist.

7. Gurtaufroller (1) nach einem der Ansprüche 1 bis 6, **dadurch gekennzeichnet, dass** eine relativ zum Gehäuse (2) um die Achse (4) drehbar gelagerte Aufrolleinrichtung, insbesondere eine Rolle (29), vorgesehen ist, wobei eine Bewegbarkeit der Aufrolleinrichtung relativ zum Gehäuse (2) um die Achse (4) durch ein bewegbar mit dem Gehäuse (2) verbundenes Schwert (16), insbesondere ein etwa parallel zur Achse (4) translatorisch verschiebbares Schwert (16), reversibel blockierbar ist wobei bevorzugt ein federbelasteter Arm (18) vorgesehen ist, welcher von einer ersten Position in eine zweite Position bringbar ist, in welcher zweiten Position der Arm (18) das Schwert (16) in einer Freilaufposition hält, wobei das Schwert (16) vorzugsweise in einer Richtung normal zur Achse (4) bewegbar ist.

8. Gurtaufroller (1) nach Anspruch 7, **dadurch gekennzeichnet, dass** der Gurtaufroller (1) derart ausgebildet ist, dass der Arm (18) durch eine Bewegung des Koppelelementes (5) von einer Ruheposition in eine Arbeitsposition und/oder durch ein Ausziehen des Gurtes (3) in die zweite Position bringbar ist.

9. Gurtaufroller (1) nach Anspruch 7 oder 8, **dadurch gekennzeichnet, dass** der Arm (18) gegen die Aufrolleinrichtung federbelastet ist, sodass ein leichter Rücklauf des Gurtes (3) eine Bewegung des Armes (18) von der zweiten Position in die erste Position bewirkt, wodurch das Schwert (16) mittels einer Feder zurückbewegt wird und eine Bewegung der Aufrolleinrichtung blockiert.

10. Gurtaufroller (1) nach einem der Ansprüche 1 bis 9, **dadurch gekennzeichnet, dass** eine Ratsche mit einem Ratschenhebel (19) vorgesehen ist, mit welchem der Gurt (3) aufrollbar und spannbar istwobei bevorzugt vorgesehen ist, dass der Ratschenhebel (19) außerhalb des Gehäuses (2) geteilt ist, wobei ein äußeres Ratschenhebelteil (40) relativ zu einem inneren Ratschenhebelteil (41) schwenkbar ist, insbesondere um eine zur Achse (4) parallele Ratschenhebelschwenkachse (42).

11. Gurtaufroller (1) nach Anspruch 10, **dadurch gekennzeichnet, dass** eine relativ zum Gehäuse (2) um die Achse (4) drehbar gelagerte Aufrolleinrichtung, insbesondere eine Rolle (29), vorgesehen ist, mit welcher Aufrolleinrichtung ein Sägezahnprofil (20) verbunden ist, um bei einer Rotation um die Achse (4) in eine Spannrichtung (23) ein Spannen des Gurtes (3) zu erreichen und gleichzeitig ein Entspannen durch eine Rotation entgegen der Spannrichtung (23) zu vermeiden, wobei bevorzugt vorgesehen ist, dass ein um die Achse (4) drehbar mit dem Gehäuse (2) verbundener Ratschenhebel (19) vorgesehen ist, welcher auf ein federbelastetes Ratschenschwert (21) wirkt, wobei die Aufrolleinrichtung über das Ratschenschwert mit dem Ratschenhebel (19) relativ zum Gehäuse (2) in Spannrichtung (23) betätigbar ist, wobei bevorzugt vorgesehen ist, dass der Ratschenhebel (19) relativ zur Aufrolleinrichtung entgegen der Spannrichtung (23) bewegbar ist, indem das Ratschenschwert (21) durch das Sägezahnprofil (20) angehoben wird.

12. Gurtaufroller (1) nach Anspruch 11, **dadurch gekennzeichnet, dass** am Gehäuse (2) ein federbelastetes Verriegelungsschwert (22) vorgesehen ist, welches in einer ersten Position eine Bewegung der Aufrolleinrichtung entgegen der Spannrichtung (23) relativ zum Gehäuse (2) blockiert und durch das Sägezahnprofil (20) entgegen einer Federkraft anhebbar ist, um eine Bewegung der Aufrolleinrichtung relativ zum Gehäuse (2) entgegen der Spannrichtung (23) zu ermöglichen.

13. Gurtaufroller (1) nach Anspruch 11 oder 12, **dadurch gekennzeichnet, dass** das Koppelelement (5) durch eine Bewegung des Ratschenhebels (19) relativ zum Gehäuse (2) entgegen der Spannrichtung (23) von einer Ruheposition in eine Arbeitsposition bewegbar ist, insbesondere indem durch die Bewegung des Ratschenhebels (19) eine Halteeinrichtung gelöst wird, welche das Koppelelement (5) gegen eine Feder in der Ruheposition hält.

14. Gurtaufroller (1) nach einem der Ansprüche 1 bis 13, **dadurch gekennzeichnet, dass** der Gurt (3) durch eine Gurtfixierelementausnehmung (46) im Gurtfixierelement (44) geführt ist, wobei mit dem Gurt (3) ferner, insbesondere endseitig, ein Ringelement (43) verbunden ist, welches in einer ersten Position und einer zweiten Position formschlüssig mit dem Gurtfixierelement (44) verbindbar ist, um einerseits ein endseitiges Befestigen des Gurtes (3) am Gurtfixierelement (44) mittels des Ringelementes (43) und andererseits ein Fixieren eines Körpers durch Umgreifen des Körpers durch den Gurt (3) zu ermöglichen, wobei eine Gurtschlinge durch das Gurtfixierelement (44) und das Ringelement (43) gebildet wird.

## Claims

1. A seatbelt retractor (1) with a housing (2), in which a belt (3) can be rolled up around an axis (4) by means of a spring, in particular a leaf spring (30), wherein a coupling element (5) connected with the housing (2) is provided, wherein the coupling element (5) in particular has a hook (6), the coupling element (5) of which can be used to positively couple the housing (2) with a corresponding counter-piece, which is fastened in particular in a vehicle, **characterized in that** the coupling element (5) can be brought from a resting position, in which the coupling element (5) flatly abuts the housing (2) and cannot be coupled with the counter-piece, into a working position, in which the coupling element (5) is laterally arranged on the housing (2) and can be coupled with the counter-piece, wherein the coupling element (5) is spring-loaded against a retention device by means of a spring in the resting position, wherein the retention device can be moved by means of an activating element (9) in such a way that the spring can move the coupling element (5) out of the resting position into the working position.

2. The seatbelt retractor (1) according to claim 1, **characterized in that** the coupling element (5) is translationally connected with the housing (2), in particular along a displacement direction (7) normal to the axis (4).

3. The seatbelt retractor (1) according to claim 1 or 2, **characterized in that** the coupling element (5) is rotationally connected with the housing (2), in particular around a pivot axis (8) roughly parallel or normal to the axis (4).

4. The seatbelt retractor (1) according to one of claims 1 to 3, **characterized in that** the coupling element (5) can be pivotably connected with the counter-piece, wherein the coupling element (5) in particular has one or two cylindrical elements, which correspond with corresponding receptacles in the counter-piece, which can be designed as an adapter (10).

5. The seatbelt retractor (1) according to one of claims 1 to 4, **characterized in that** the coupling element (5) has a recess (12), wherein an adapter (10) with an undercut (11) can be introduced into this recess (12) in an insertion area (13) and fixed therein through displacement in a fixing area (14) by means of the undercut (11), wherein it is preferably provided that the housing (2) have a housing recess (35) corresponding with the fixing area (14), by means of which the adapter (10) can be fixed in the fixing area (14), in particular when the coupling element (5) is in the resting position.

6. The seatbelt retractor (1) according to one of claims 1 to 5, **characterized in that** an adapter (10) that can be positively detachably connected with the coupling element is provided, which at a first end (36) can be connected with a substrate, in particular a vehicle body, and has a cylindrical area (15) that can be introduced in particular into an insertion area (13) of a recess (12), wherein an undercut (11) is provided between the cylindrical area (15) and the first end (36), and can be used to fix the adapter (10) in particular in a fixing area (14).

7. The seatbelt retractor (1) according to one of claims 1 to 6, **characterized in that** a retractor, in particular a roller (29), mounted so that it can rotate around the axis (4) relative to the housing (2) is provided, wherein a movability of the retractor relative to the housing (2) around the axis (4) can be reversibly blocked by a blade (16) that is movably connected with the housing (2), in particular a blade (16) that can be translationally displaced roughly parallel to the axis (4), wherein a spring-loaded arm (18) is preferably provided, which can be brought from a first position into a second position, wherein the arm (18) holds the blade (16) in a freewheel position in this second position, wherein the blade (16) can preferably be moved in a direction normal to the axis (4).

8. The seatbelt retractor (1) according to claim 7, **characterized in that** the seatbelt retractor (1) is designed in such a way that the arm (18) can be brought from a resting position into a working position by moving the coupling element (5) and/or into the second position by pulling out the belt (3).

9. The seatbelt retractor (1) according to claim 7 or 8, **characterized in that** the arm (18) is spring loaded against the retractor, so that a slight rebound of the belt (3) causes the arm (18) to move from the second position into the first position, as a result of which the blade (16) is moved backward by means of a spring, and blocks a movement of the retractor.

10. The seatbelt retractor (1) according to one of claims 1 to 9, **characterized in that** a ratchet with a ratchet lever (19) is provided, with which the belt (3) can be retracted and tensioned, wherein it is preferably provided that the ratchet lever (19) be divided outside of the housing (2), wherein an outer ratchet lever part (40) can be pivoted relative to an inner ratchet lever part (41), in particular around a ratchet lever pivot axis (42) parallel to the axis (4).

11. The seatbelt retractor (1) according to claim 10, **characterized in that** a retractor, in particular a roller (29), mounted so that it can rotate around the axis (4) relative to the housing (2) is provided, wherein this retractor is connected with a sawtooth profile (20), so as to achieve a tensioning of the belt (3) during a rotation around the axis (4) in a tensioning direction (23), and simultaneously avoid a loosening due to a rotation opposite the tensioning direction (23), wherein it is preferably provided that a ratchet lever (19) connected with the housing (2) so that it can rotate around the axis (4) is provided, and acts on a spring-loaded ratchet blade (21), wherein the retractor can be activated via the ratchet blade with the ratchet lever (19) in a tensioning direction (23) relative to the housing (2), and wherein it is preferably provided that the ratchet lever (19) can be moved relative to the retractor opposite the tensioning direction (23) by having the ratchet blade (21) be lifted up by the sawtooth profile (20).

12. The seatbelt retractor (1) according to claim 11, **characterized in that** a spring-loaded locking blade (22) is provided on the housing (2), which in a first position blocks a movement by the retractor opposite the tensioning direction (23) relative to the housing (2) and can be lifted by the sawtooth profile (20) against a spring force, so as to allow the retractor to move relative to the housing (2) opposite the tensioning direction (23).

13. The seatbelt retractor (1) according to claim 11 or 12, **characterized in that** the coupling element (5) can be moved from a resting position into a working position by moving the ratchet lever (19) relative to the housing (2) opposite the tensioning direction (23), in particular by moving the ratchet lever (19) to trigger a retention device that retains the coupling element (5) in the resting position against a spring.

14. The seatbelt retractor (1) according to one of claims 1 to 13, **characterized in that** the belt (3) is guided through a belt retention element recess (46) in the belt retention element (44), wherein a ring element (43) is further connected with the belt (3), in particular on the end side, which in a first position and a second position can be positively connected with the belt retention element (44), so that the belt (3) can be connected on the end side to the belt retention element (44) by means of the ring element (43) on the one hand, and a body can be fixed by having the belt (3) wrap around the body on the other, wherein a belt loop is formed by the belt retention element (44) and the ring element (43).

## Revendications

1. Enrouleur de sangle (1), comportant un boîtier (2), dans lequel une sangle (3) peut être enroulée autour d'un axe (4) au moyen d'un ressort, en particulier d'un ressort à lames (30), sachant qu'un élément d'accouplement (5) relié au boîtier (2) est prévu, sachant que l'élément d'accouplement (5) comporte en particulier un crochet (6), élément d'accouplement (5) par lequel le boîtier (2) peut être couplé par conformité de forme à une contre-pièce correspondante, laquelle est fixée en particulier dans un véhicule, **caractérisé en ce que** l'élément d'accouplement (5) peut être mis en place d'une position de repos, dans laquelle l'élément d'accouplement (5) s'applique en surface au boîtier (2) et ne peut pas être couplé à la contre-pièce, à une position de travail, dans laquelle l'élément d'accouplement (5) est disposé latéralement sur le boîtier (2) et peut être couplé à la contre-pièce, sachant que l'élément d'accouplement (5) est sollicité par un ressort dans la position de repos en opposition à un système de maintien au moyen d'un ressort, sachant que le système de maintien peut être déplacé au moyen d'un élément d'actionnement (9) de telle manière que l'élément d'accouplement (5) peut être déplacé au moyen du ressort de la position de repos à la position de travail.

2. Enrouleur de sangle (1) selon la revendication 1, **caractérisé en ce que** l'élément d'accouplement (5) est relié de façon translatoire au boîtier (2), en particulier le long d'une direction de déplacement (7), laquelle est normale par rapport à l'axe (4).

3. Enrouleur de sangle (1) selon la revendication 1 ou 2, **caractérisé en ce que** l'élément d'accouplement (5) est relié en rotation au boîtier (2), en particulier autour d'un axe de pivotement (8) à peu près parallèle ou normal par rapport à l'axe (4).

4. Enrouleur de sangle (1) selon l'une quelconque des revendications 1 à 3, **caractérisé en ce que** l'élément d'accouplement (5) peut être relié pouvant pivoter avec la contre-pièce, sachant que l'élément d'accouplement (5) comporte en particulier un ou deux éléments cylindriques, lequel correspond aux logements correspondants dans la contre-pièce, laquelle peut être constituée sous la forme d'un adaptateur (10).

5. Enrouleur de sangle (1) selon l'une quelconque des revendications 1 à 4, **caractérisé en ce que** l'élément d'accouplement (5) comporte un évidement (12) évidement (12) dans lequel un adaptateur (10) avec une dépouille (11) peut être introduit dans une zone d'introduction (13) et peut être fixé par un déplacement dans une zone de fixation (14) au moyen de la dépouille (11), sachant qu'il est de préférence prévu que le boîtier (2) comporte un évidement de boîtier (35) correspondant à la zone de fixation (14) au moyen duquel l'adaptateur (10) peut être fixé dans la zone de fixation (14), en particulier lorsque l'élément d'accouplement (5) se trouve dans la position de repos.

6. Enrouleur de sangle (1) selon l'une quelconque des revendications 1 à 5, **caractérisé en ce qu'**un adaptateur (10) pouvant être relié par conformité de forme de façon amovible à l'élément d'accouplement est prévu, lequel peut être relié à une première extrémité (36), à un fond, en particulier d'une carrosserie de véhicule et comporte une zone cylindrique (15), laquelle peut être introduite en particulier dans une zone d'introduction (13) d'un évidement (12), sachant qu'une dépouille (11) est prévue entre la zone cylindrique (15) et la première extrémité (36) avec laquelle l'adaptateur (10) est fixé en particulier dans une zone de fixation (14).

7. Enrouleur de sangle (1) selon l'une quelconque des revendications 1 à 6, **caractérisé en ce qu'**un système d'enroulement logé pouvant tourner par rapport au boîtier (2) autour de l'axe (4), en particulier un rouleau (29), est prévu, sachant qu'une mobilité du système d'enroulement peut être bloquée de façon réversible par rapport au boîtier (2) autour de l'axe (4) par une lame (16) reliée déplaçable avec le boîtier (2), en particulier une lame (16) déplaçable de façon translatoire à peu près parallèlement à l'axe (4), sachant de préférence qu'un bras sollicité par ressort (18) est prévu, lequel peut être placé d'une première position à une deuxième position, deuxième position dans laquelle le bras (18) maintient la lame (16) dans une position de roue libre, sachant que la lame (16) peut être mobile de préférence dans une direction normalement par rapport à l'axe (4).

8. Enrouleur de sangle (1) selon la revendication 7, **caractérisé en ce que** l'enrouleur de sangle (1) est constitué de telle sorte que le bras (18) peut être placé par un mouvement de l'élément d'accouplement (5) d'une position de repos à une position de travail et/ou par un étirement de la sangle (3) dans la deuxième position.

9. Enrouleur de sangle (1) selon la revendication 7 ou 8, **caractérisé en ce que** le bras (18) est sollicité par ressort contre le système d'enroulement de telle manière qu'un léger retour de la sangle (3) cause un mouvement du bras (18) de la deuxième position à la première position, la lame (16) revenant de ce fait en arrière au moyen d'un ressort et bloquant un mouvement du système d'enroulement.

10. Enrouleur de sangle (1) selon l'une quelconque des revendications 1 à 9, **caractérisé en ce qu'**un cliquet avec un levier à cliquet (19) est prévu avec lequel la sangle (3) peut être enroulée et tendue, sachant qu'il est prévu de préférence que le levier à cliquet (19) est séparé en dehors du boîtier (2), sachant qu'une partie de levier à cliquet extérieure (40) peut pivoter par rapport à une partie de levier à cliquet intérieure (41), en particulier autour d'un axe de pivotement de levier à cliquet (42) parallèle à l'axe (4).

11. Enrouleur de sangle (1) selon la revendication 10, sachant qu'un système d'enroulement logé pouvant tourner par rapport au boîtier (2) autour d'un axe (4), en particulier un rouleau (29), est prévu, système d'enroulement avec lequel un profilé en dents de scie (20) est relié pour obtenir une tension de la sangle (3) lors d'une rotation autour de l'axe (4) dans une direction de tension (23) et éviter simultanément une détente par une rotation en sens contraire à la direction de tension (23), sachant qu'il est de préférence prévu qu'un levier à cliquet (19) relié pouvant tourner avec le boîtier (2) autour de l'axe (4) est prévu, lequel agit sur une lame à cliquet (21) sollicitée par ressort, sachant que le système d'enroulement peut être actionné dans la direction de tension (23) par le biais de la lame à cliquet avec le levier à cliquet (19) par rapport au boîtier (2), sachant qu'il est de préférence prévu que le levier à cliquet (19) peut être mobile par rapport au système d'enroulement en opposition à la direction de tension (23), la lame à cliquet (21) étant soulevée par le profilé en dents de scie (20).

12. Enrouleur de sangle (1) selon la revendication 11, **caractérisé en ce qu'**une lame de verrouillage (22) sollicitée par ressort est prévue sur le boîtier (2), laquelle bloque un mouvement du système d'enroulement dans une première position dans le sens contraire à la direction de tension (23) par rapport au boîtier (2) et peut être soulevée par le profilé en dents de scie (20) en opposition à une force élastique pour permettre un mouvement du système d'enroulement par rapport au boîtier (2) dans le sens contraire à la direction de tension (23).

13. Enrouleur de sangle (1) selon la revendication 11 ou 12, **caractérisé en ce que** l'élément d'accouplement (5) peut être déplacé par un mouvement du levier à cliquet (19) par rapport au boîtier (2) dans le sens contraire à la direction de serrage (23) d'une position de repos à une position de travail, un système de maintien étant en particulier déclenché par le mouvement du levier à cliquet (19), lequel maintient l'élément d'accouplement (5) contre un ressort dans la position de repos.

14. Enrouleur de sangle (1) selon l'une quelconque des revendications 1 à 13, **caractérisé en ce que** la sangle (3) est guidée par un évidement d'élément de fixation de sangle (46) dans l'élément de fixation de sangle (44), sachant qu'avec la sangle (3) un élément annulaire (43) est en plus relié, en particulier en extrémité, lequel peut être relié dans une première position et dans une deuxième position par conformité de forme à l'élément de fixation de sangle (44) pour permettre d'une part une fixation en extrémité de la sangle (3) sur l'élément de fixation de sangle (44) au moyen de l'élément annulaire (43) et d'autre part une fixation d'un corps par enveloppement du corps par la sangle (3), sachant qu'une boucle de sangle est formée par l'élément de fixation de sangle (44) et l'élément annulaire (43).
